# EUROPÄISCHE PATENTANMELDUNG

(11) **EP 2 216 742 A1**
(43) Veröffentlichungstag der Anmeldung: **11.08.2010**
(21) Anmeldenummer: 09001789.8
(22) Anmeldetag: 09.02.2009
(51) Int. Cl.: G06Q 20/00

(54) **Mobiles Zahlungsverfahren und Vorrichtungen**

(71) Anmelder: Reich, C. Patrick, 82340 Feldafing (DE); Weber-Henschel, Rupert, 80799 München (DE)
(72) Erfinder: Reich, C. Patrick, 82340 Feldafing (DE); Weber-Henschel, Rupert, 80799 München (DE)
(74) Vertreter: Samson & Partner

(57) **Zusammenfassung**

Die Erfindung bezieht sich auf ein Verfahren zur Zahlung eines Geldbetrags über ein ein Chipmodul enthaltendes mobiles Endgerät. Das Verfahren umfasst ein Bestimmen einer Zahlungsquelle auf dem mobilen Endgerät, Bestätigen von die bestimmte Zahlungsquelle umfassenden Zahlungsdaten durch Eingeben einer zu einer Vermittlungszentrale gehörenden Kennung, Elektronisches Signieren der Zahlungsdaten und der verschlüsselten Kennung mittels eines auf dem Chipmodul abgelegten Schlüssels, Übermitteln der signierten Zahlungsdaten und der signierten, verschlüsselten Kennung an die Vermittlungszentrale, und Übermitteln einer Nachricht von der Vermittlungszentrale an ein zur bestimmten Zahlungsquelle gehörendes Zahlungsinstitut, den Geldbetrag von der Zahlungsquelle abzubuchen. Die Erfindung bezieht sich ferner auf ein Computerprogramm für ein mobiles Endgerät und ein Computerprogramm für ein als Vermittlungszentrale fungierendes Computersystem, sowie auf eine Vermittlungszentrale, ein mobiles Endgerät, ein Chipmodul und auf ein eine Vermittlungszentrale und ein mobiles Endgerät umfassendes System.

## Beschreibung

### GEBIET DER ERFINDUNG

Die vorliegende Erfindung bezieht sich im Allgemeinen auf Verfahren, Vorrichtungen, Systeme und Computerprogramme für elektronische Zahlverfahren und insbesondere auf Verfahren, Systeme und Computerprogramme zur Zahlung mittels für eine drahtlose Kommunikation ausgestatteten mobilen Endgeräten.

### HINTERGRUND DER ERFINDUNG

Mobile Zahlverfahren gewinnen immer mehr an Bedeutung, da die meisten Nutzer heutzutage ein Mobiltelefon bei sich tragen und sie von großem praktischen Nutzen sind, weil zum Beispiel kein Bargeld mehr übergeben werden muss. Es gibt bereits einige Pilotprojekte Parkgebühren per Mobiltelefon zu bezahlen.

Der Verbreitungsgrad von Mobiltelefonen verleiht dem so genannten Mobile Payment, kurz M-Payment, neue Perspektiven. Die Nachfrage ist unter Verbrauchern groß: Einer vom Bundeswirtschaftsministerium in Auftrag gegeben Studie zufolge würde knapp die Hälfte der Deutschen das Mobiltelefon gern für Zahlungsvorgänge nutzen.

Viele Kunden sind jedoch sehr zurückhaltend, über das Internet oder das Mobilfunknetz sicherheitsrelevante Daten, wie zum Beispiel die Nummer(n) ihrer Kreditkarte(n), oder die geheime(n) PINs ihrer EC-Karte(n) zu übermitteln, selbst wenn die Übermittlung über eine sichere, verschlüsselte Verbindung erfolgt. Diese Zurückhaltung, sicherheitsrelevante Daten über das Mobiltelefon oder das Internet zu übermitteln, ist für die Umsätze im Bereich des elektronischen Handels sicherlich ein maßgeblicher limitierender Faktor.

Seit Herbst 2006 können Autofahrer in Köln ihre Parkscheine an fünf Automaten über das Mobiltelefon-gestützte Bezahlsystem "Crandy" bezahlen. Bei diesem Bezahlsystem erfolgt die Abbuchung nur von einem einzigen Konto, das der Benutzer extra beim Anbieter des mobilen Zahlungsverfahrens einrichten muss und auf das er von seinem herkömmlichen Girokonto Geld transferieren muss.

Aus der CA 2 363 220 ist bekannt die SIM-Karte eines Mobiltelefons als Kreditkarte zu nutzen, bei der alle zur Zahlung notwendigen Daten, wie die Kreditkartennummer, Information über den Benutzer und ein Signaturschlüssel auf der SIM-Karte abgelegt sind. Eine verschlüsselte SMS wird an ein Mobiltelefon des Benutzers gesendet und fordert Kreditkartenzahlungsinformation, Informationen über den Benutzer, eine digitale Signatur und eine Bestätigung an. Die SIM-Karte im Mobiltelefon wird als manipulationssichere Vorrichtung benutzt, um Informationen über den Benutzer, Kreditkartendaten und einen privaten Schlüssel abzulegen.

Die WO 98/47116 bezieht sich auf ein Tele-/Datenkommunikationsnetz mit einem Serviceknoten, der eine Bezahlung/Transfer von einem Kundenkonto eines Kreditinstituts eines Kunden auf ein Händlerkonto eines Kreditinstituts eines Händlers erleichtert.

Die Sicherheit einer Datenübertragung hängt unter anderem auch davon ab, ob der Empfänger verifizieren kann, ob einerseits die empfangene Nachricht tatsächlich von demjenigen stammt, der angibt der Absender zu sein (Authentizität) und andererseits, ob der Empfänger verifizieren kann, ob die Nachricht nicht verändert wurde (Integrität).

Die EP 1 027 784 B1 bezieht sich auf ein Verfahren zum digitalen Signieren einer Nachricht, bei dem ein Mobiltelefon als Signiervorrichtung verwendet wird. Ein zum digitalen Signieren verwendeter geheimer Schlüssel ist dabei auf einer Speichereinheit einer Chip-Karte des Mobiltelefons abgelegt.

Die WO 03/049364 A1 offenbart ein Zahlungsverfahren über ein mobiles Kommunikationsgerät, das ein Nachrichtenverarbeitungsprogrammmodul umfasst, das in einer SIM-Karte enthalten ist.

Die EP 0 986 275 A1 offenbart ein Verfahren zum Kaufen von Waren und Dienstleistungen mit einem Mobiltelefon. Um ein Produkt oder eine Dienstleistung vom Dienstanbieter zu bestellen, muss der Kunde ein Geldkonto in der Kundendatenbank errichten.

Die vorliegende Erfindung zielt darauf ab, Verfahren, Systeme und Computerprogramme bereit zu stellen, die eine Abbuchung von vorzugsweise mehreren bereits bei Kreditinstituten bestehenden Konten erlauben, ohne dass sicherheitsrelevante Daten über Datennetze (Internet, Mobiltelefonnetz, etc.) preisgegeben werden müssen oder der Benutzer sich einen oder mehrere geheime PINs merken muss.

### KURZFASSUNG DER ERFINDUNG

Ein Aspekt der Erfindung bezieht sich auf ein Verfahren zur Zahlung eines Geldbetrags über ein ein Chipmodul enthaltendes mobiles Endgerät. Das Verfahren umfasst ein Bestimmen einer Zahlungsquelle auf dem mobilen Endgerät, Bestätigen von die bestimmte Zahlungsquelle umfassenden Zahlungsdaten durch Eingeben einer zu einer Vermittlungszentrale gehörenden Kennung, zumindest teilweise elektronisches Signieren der Zahlungsdaten und der verschlüsselten Kennung mittels eines auf der Chipmodul abgelegten Schlüssels, Übermitteln der signierten Zahlungsdaten und der signierten, verschlüsselten Kennung an die Vermittlungszentrale, und Übermitteln einer Nachricht von der Vermittlungszentrale an ein zur ausgewählten Zahlungsquelle gehörendes Zahlungsinstitut, den Geldbetrag von der Zahlungsquelle abzubuchen.

Ein weiterer Aspekt der Erfindung bezieht sich auf ein Verfahren zur Zahlung eines Geldbetrags über ein ein Chipmodul enthaltendes mobiles Endgerät. Das Verfahren umfasst ein Eingeben von Zahlungsdaten, die eine Angabe einer Zahlungsquelle umfassen, und einer zu einer Vermittlungszentrale gehörenden Kennung auf einem mobilen Endgerät, Berechnen eines Bestätigungscodes auf der Grundlage der Kennung, der Zahlungsdaten und eines Zeitstempels durch das mobile Endgerät, Übermitteln der Zahlungsdaten, einer das mobile Endgerät identifizierenden Zeichenkette und des Bestätigungscodes von einem Zahlungsempfänger an die Vermittlungszentrale, und Übermitteln einer Nachricht von der Vermittlungszentrale an ein zur ausgewählten Zahlungsquelle gehörendes Zahlungsinstitut, den Geldbetrag von der Zahlungsquelle abzubuchen.

Noch ein weiterer Aspekt der Erfindung bezieht sich auf ein Computerprogramm, das entweder in der Form eines maschinenlesbaren Medium ist mit Programmcode, der darauf gespeichert ist, oder in der Form eines propagierten Signals, das eine Darstellung eines Programmcodes umfasst. Der Programmcode ist ausgelegt, ein Verfahren zur Zahlung eines Geldbetrags auszuführen, wenn er auf einem als Vermittlungszentrale verwendeten Computersystem ausgeführt wird. Das Verfahren umfasst ein Empfangen von signierten Zahlungsdaten, die eine vom Benutzer bestimmte Zahlungsquelle umfassen, Empfangen einer zur Vermittlungszentrale gehörenden signierten, verschlüsselten Kennung, die zur Bestätigung der Zahlungsdaten von dem mobilen Endgerät aus übermittelt wurde; Überprüfen der Zahlungsdaten und der verschlüsselten Kennung anhand der Signatur; Überprüfen der entschlüsselten Kennung; und Übermitteln einer Nachricht von der Vermittlungszentrale an ein zur ausgewählten Zahlungsquelle gehörendes Zahlungsinstitut, den Geldbetrag von der Zahlungsquelle abzubuchen.

Noch ein weiterer Aspekt der Erfindung bezieht sich auf ein Computersystem zur Verwendung als Vermittlungszentrale, auf dem das erfindungsgemäße Verfahren durchgeführt werden kann.

Noch ein weiterer Aspekt der Erfindung bezieht sich auf ein Computerprogramm, das entweder in der Form eines maschinenlesbaren Medium ist mit Programmcode, der darauf gespeichert ist, oder in der Form eines propagierten Signals, das eine Darstellung eines Programmcodes umfasst. Der Programmcode ist ausgelegt, ein Verfahren zur Zahlung eines Geldbetrags auszuführen, wenn er auf einem ein Chipmodul enthaltendenmobilen Endgerät ausgeführt wird. Das Verfahren umfasst ein Ermöglichen dem Benutzer, eine Zahlungsquelle zu bestimmen und Zahlungsdaten, die die bestimmte Zahlungsquelle umfassen, durch Eingeben einer zur Vermittlungszentrale gehörenden Kennung zu bestätigen, zumindest teilweise elektronisches Signieren der Zahlungsdaten und der signierten, verschlüsselten Kennung mittels eines auf dem Chipmodul abgelegten Schlüssels, und Übermitteln der signierten Zahlungsdaten und der signierten, verschlüsselten Kennung an die Vermittlungszentrale.

Noch ein weiterer Aspekt der Erfindung bezieht sich auf ein mobiles Endgerät, auf dem das erfindungsgemäße Verfahren durchgeführt werden kann.

Noch ein weiterer Aspekt der Erfindung bezieht sich auf ein austauschbares Chipmodul, auf der das obige Computerprogramm abgelegt ist und die ausgelegt ist, das erfindungsgemäße Verfahren auszuführen.

Ein letzter Aspekt der Erfindung bezieht sich schließlich auf ein System zur Zahlung eines Geldbetrags, umfassend eine Vermittlungszentrale und ein ein Chipmodul enthaltendes mobiles Endgerät. Das mobile Endgerät ist ausgelegt, dem Benutzer zu ermöglichen, eine Zahlungsquelle zu bestimmen und die bestimmte Zahlungsquelle umfassende Zahlungsdaten durch Eingeben einer zur Vermittlungszentrale gehörenden Kennung zu bestätigen, die Zahlungsdaten und die verschlüsselte Kennung mittels eines auf dem Chipmodul abgelegten Schlüssels zumindest teilweise zu signieren, und die signierten Zahlungsdaten und die signierte, verschlüsselte Kennung an die Vermittlungszentrale zu übermitteln. Die Vermittlungszentrale ist ausgelegt, eine Nachricht von der Vermittlungszentrale an ein zur ausgewählten Zahlungsquelle gehörendes Zahlungsinstitut zu übermitteln, den Geldbetrag von der Zahlungsquelle abzubuchen.

Weitere Merkmale sind in den offenbarten Verfahren und Vorrichtungen inhärent vorhanden oder sind für Fachleute aus der folgenden detaillierten Beschreibung von Ausführungsformen and ihren beigefügten Zeichnungen offensichtlich.

### KURZBESCHREIBUNG DER ZEICHNUNGEN

Ausführungsformen der Erfindung werden nun beispielhaft und unter Bezugnahme auf die beiliegenden Zeichnungen beschrieben, in denen:
Fig. 1 zeigt ein System zur Zahlung eines Geldbetrags über ein eine SIM-Karte enthaltendes Mobiltelefon an einen Empfänger, gemäß einer ersten Variante der Erfindung;
Fig. 2 zeigt einen Zahlungsvorgang in einem Online-Shop aus Sicht eines Kunden (mit SMS) gemäß der ersten Variante der Erfindung;
Fig. 3 zeigt einen vollständigen Ablauf einer Online-Zahlung gemäß der ersten Variante der Erfindung;
Fig. 4 zeigt einen Ablauf einer Zahlung unter Privatpersonen (Peer-to-Peer Zahlung) gemäß einer zweiten Variante der Erfindung;
Fig. 5 zeigt einen vollständigen Ablauf einer Zahlung unter Privatpersonen (Peer-to-Peer Zahlung) gemäß der zweiten Variante der Erfindung;
Fig. 6 zeigt einen Ablauf einer Peer-to-Cash Zahlung an eine Privatperson gemäß einer dritten Variante der Erfindung;
Fig. 7 zeigt einen vollständigen Ablauf einer Peer-to-Cash Zahlung an eine Privatperson (Peer-to-Cash Zahlung) gemäß der dritten Variante der Erfindung;
Fig. 8 zeigt einen Zahlungsvorgang an einem Verkaufspunkt (Point of Sale, POS) aus Sicht eines Kunden gemäß einer vierten Variante der Erfindung;
Fig. 9 zeigt einen Zahlungsvorgang am Verkaufspunkt (Point of Sale) aus Sicht des Händlers gemäß der vierten Variante der Erfindung;
Fig. 10 zeigt einen vollständigen Ablauf einer Zahlung am Verkaufspunkt gemäß der vierten Variante der Erfindung;
Fig. 11 zeigt einen Zahlungsvorgang in einem Online-Shop (ohne SMS) gemäß einer fünften Variante der Erfindung;
Fig. 12 zeigt einen Zahlungsvorgang in einem Online-Shop (ohne SMS) gemäß der fünften Variante der Erfindung;
Fig. 13 ist eine diagrammartige Darstellung einer Ausführungsform eines Computersystems, das die Funktionalität einer Vermittlungszentrale aufweist.

Die Zeichnungen und die Beschreibung der Zeichnungen beziehen sich auf Ausführungsformen der Erfindung und nicht auf die Erfindung selbst.

### BESCHREIBUNG BEVORZUGTER AUSFÜHRUNGSFORMEN

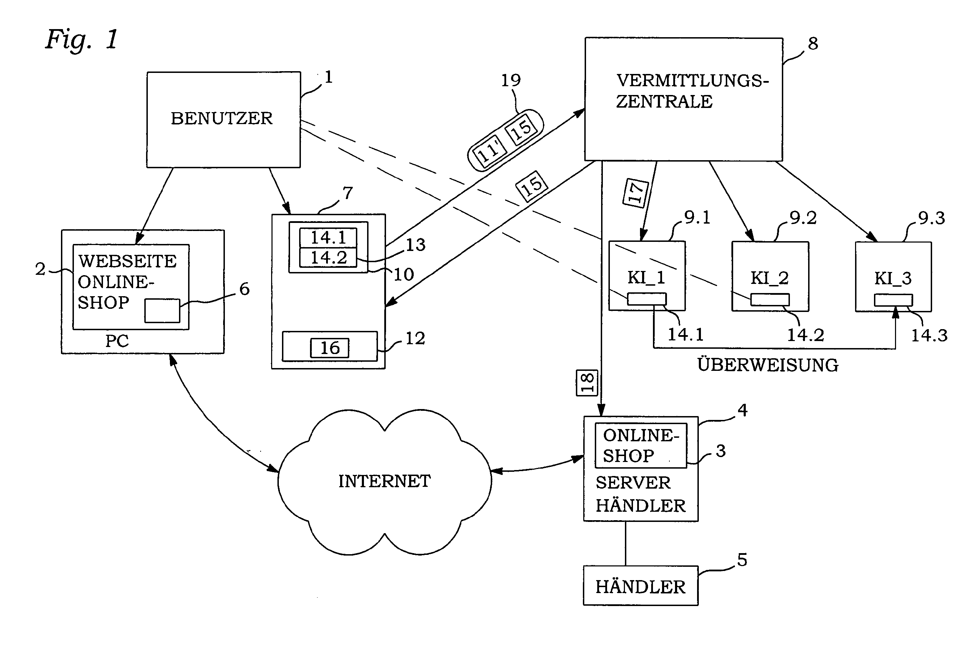

Fig. 1 zeigt ein System zur Zahlung eines Geldbetrags über ein eine SIM-Karte enthaltendes Mobiltelefon an einen Empfänger. Bevor jedoch näher auf die Beschreibung von Fig. 1 eingegangen wird, werden einige Aspekte der verschiedenen beispielhaften Ausführungsformen der Erfindung diskutiert.

Einige der Ausführungsformen der Erfindung beziehen sich auf ein Verfahren zur Zahlung eines Geldbetrags über ein ein Chipmodul enthaltendes mobiles Endgerät, welches umfasst: Bestimmen einer Zahlungsquelle aus mehreren Zahlungsquellen auf dem mobilen Endgerät, Bestätigen von die bestimmte Zahlungsquelle umfassenden Zahlungsdaten durch Eingeben einer zu einer Vermittlungszentrale gehörenden Kennung, elektronisches Signieren der Zahlungsdaten und der verschlüsselten Kennung mittels eines auf dem Chipmodul abgelegten Schlüssels, Übermitteln der signierten Zahlungsdaten und der signierten, verschlüsselten Kennung an die Vermittlungszentrale, und Übermitteln einer Nachricht von der Vermittlungszentrale an ein zur ausgewählten Zahlungsquelle gehörendes Zahlungsinstitut, den Geldbetrag von der Zahlungsquelle abzubuchen.

Die Erfindung betrifft auch ein Computerprogramm für eine Vermittlungszentrale, ein Computerprogramm für ein mobiles Endgerät, und auf die Vermittlungszentrale, das mobile Endgerät und das Chipmodul an sich.

Die Erfindung betrifft auch ein verteiltes System aus mobilem Endgerät und Vermittlungszentrale, auf dem das obige Verfahren zur Zahlung eines Geldbetrags abläuft, wobei das Verfahren teilweise auf dem mobilen Endgerät abläuft und teilweise auf der Vermittlungszentrale.

Das Verfahren erlaubt in einem Ausführungsbeispiel einen Zugriff auf mehrere Zahlungsquellen, d.h. Kreditkarten, Konten, etc., ohne dass sicherheitsrelevante Informationen bezüglich dieser Zahlungsquellen (Kreditkartennummern, etc.) über das Mobilfunknetz übertragen werden oder auf einem Endgerät abgelegt werden. Die einzige Information, die der Benutzer wissen muss, ist die geheime Kennung, z.B. eine PIN, die ihm von der Vermittlungszentrale zugewiesen wird. Diese zur Vermittlungszentrale gehörende Kennung berechtigt bzw. authentifiziert den Benutzer gegenüber der Vermittlungszentrale. In Ausführungsbeispielen der Erfindung hat die Kennung die Funktion nach Art eines Passwortes. Mit der Eingabe der Kennung bestätigt der Benutzer die Zahlungsdaten, also insbesondere auch die ausgewählte Zahlungsquelle. Zahlungsdaten umfassen auch den zu zahlenden Preis und den Empfänger, für den der Zahlungsbetrag letztlich bestimmt ist.

In Ausführungsbeispielen der Erfindung ist die Kennung eine PIN in Form einer Zeichenkette. Die Kenntnis der PIN zeichnet den Benutzer als Berechtigten bei der Vermittlungszentrale aus und gibt die Zahlung frei. Um eine Zahlung über verschiedene Zahlungsinstitute, d.h. beispielsweise Kreditinstitute, etc., abwickeln zu können, muss sich der Benutzer nur eine einzige geheime Kennung merken, z.B. die zur Vermittlungszentrale gehörende PIN (im Gegensatz zur SIM-Karten PIN, die man zur Authentisierung beim Einschalten des Mobiltelefons eingibt) und er muss das mobile Endgerät, also zum Beispiel ein Mobiltelefon, physisch verfügbar haben. Das Verfahren beruht darauf, dass keine neuen Konten, Kreditkarten etc. eingerichtet werden müssen, sondern, dass der Kunde weiterhin seine bestehenden Konten etc. zur Zahlung nutzen kann. Die PIN wird nur in verschlüsselter Form ("Übermitteln ... der verschlüsselten Kennung") an die Vermittlungszentrale übermittelt. Zur Verschlüsselung der PIN eignen sich Kryptosysteme mit öffentlichen Schlüsseln (Public-Key-Kryptosysteme), wie zum Beispiel das RSA-Verfahren. Die Verschlüsselung erfolgt dabei im Mobiltelefon mit einem öffentlichen Schlüssel der Vermittlungszentrale. Nachdem die Vermittlungszentrale die verschlüsselte PIN empfangen hat, entschlüsselt sie die PIN mittels des zum öffentlichen Schlüssel gehörenden privaten Schlüssels und kann in einem Verzeichnis nachschauen, ob diese PIN einem dem jeweiligen bei der Vermittlungszentrale registrierten Benutzer gehört. Es sind jedoch auch symmetrische Verschlüsselungsverfahren (z.B. DES) für die Verschlüsselung der PIN denkbar, was jedoch auf beiden Seiten die Geheimhaltung desselben, geheimen Schlüssels erfordert. Die zur Vermittlungszentrale gehörende PIN authentifiziert den Benutzer gegenüber der Vermittlungszentrale.

Im Zusammenhang mit Ausführungsbeispielen dieser Erfindung bezieht sich der Begriff "mobiles Endgerät" allgemein auf nicht ortsgebundene Geräte, die für eine drahtlose Kommunikation mit einem anderen Teilnehmer(gerät) ausgestattet sind, Sie können etwa über ein Mobilfunknetz z.B. GSM, GPRS oder UMTS, Daten kommunizieren und können daher ortsunabhängig eingesetzt werden können. Dieser Begriff umfasst neben Mobiltelefonen auch tragbare Computer mit Mobilfunk- oder WLAN-Funktion oder Multifunktionsgeräte mit Funktionen wie Mobilfunk, IP-Telefonie, Uhr, Kamera, MP3-Player, Navigationsgerät, Spielkonsole, etc. Für die letztgenannten Geräte hat sich inzwischen die Bezeichnung Smartphone (z.B. Blackberrys) oder auch PDA-Phone durchgesetzt. Ein Smartphone stellt eine Kombination eines Mobiltelefons mit einem Personal Digital Assistant (PDA) dar. Die meisten Smartphones verfügen über eine Tastatur und liegen wie ein gewöhnliches Mobiltelefon in der Hand. Smartphones verfügen meist über ein Betriebssystem eines Drittanbieters. Es ermöglicht dem Benutzer, selbst Programme nach Belieben zu installieren. Mobiltelefone - im engen, ursprünglichen Sinne - haben im Gegensatz dazu meist nur eine vordefinierte Programmoberfläche, die nur begrenzt, z. B. durch Java-Anwendungen erweitert werden kann. Smartphones können, im Gegensatz zu gewöhnlichen Mobiltelefonen, über einen druckempfindlichen Bildschirm (Touchscreen) verfügen, der die manuelle Eingabe mit dem Finger oder speziellen Eingabestiften ermöglicht. Ferner soll der Begriff "mobiles Endgerät" vorliegend aber auch ein reines Datenfunkmodem für die Verwendung in einem z.B. WLAN fähigen Notebook erfassen.

In einem weiteren Ausführungsbeispiel ist das mobile Endgerät ein eigenständiges Bezahlterminal, das ausschließlich zur Durchführung der erfindungsgemäßen mobilen Bezahlung verwendet wird. Unter einem "Chipmodul" versteht man in den Ausführungsbeispielen der Erfindung eine austauschbare Chip-oder Speicherkarte oder ein fest installiertes Hardwarespeichermodul für teilnehmeridentifizierende Daten z.B. zur Identifikation des Benutzers in einem Netzwerk wie etwa in einem Mobilfunknetz.

In einem weiteren Ausführungsbeispiel ist ein Chipmodul eine teilnehmeridentifizierende Speicherkarte, beispielsweise eine SIM-Karte (Subscriber Identity Module), die zur Identifikation des Benutzers in einem Mobilfunknetz dient. Das SIM-Modul stellt im allgmeinen neben einem mobilen Endgerät die zweite teilnehmeridentifizierende Einheit der Mobilstation in einem Mobilfunknetz wie etwa GSM-Netz, GPRS-Netz, UMTS-Netz, WCDMA-Netz, etc. dar. In UMTS-Netzen wird die SIM-Karte häufig auch als UICC-Karte (Universal Integrated Circuit Card) bezeichnet. Die Funktion ist aber die gleiche. Ferner umfasst der Begriff Chipmodul vorliegend z.B. auch ein R-UIM (Removable User Identity Module). Dies ist eine Karte, die für CDMA-mobile Endgeräte entwickelt wurde, die die GSM SIM-Karte auf CDMA-Geräte und Netze erweitert. Eine Mobilstation ist dabei das mobile Endgerät im Netz.

In einem weiteren Ausführungsbeispiel enthält ein Chipmodul einen Prozessor und Datenspeicher und ist durch eine veränderbare Persönliche Identifikationsnummer (PIN) vor unbefugter Benutzung geschützt. Durch das Chipmodul wird das mobile Endgerät einem Benutzer zugeordnet und dieser authentifiziert. Für diese Zwecke sind auf dem Chipmodul geheime Nummern und Algorithmen gespeichert. Diese dienen bei Verbindungen auch der Verschlüsselung der Sprach- und Signalisierungsdaten (Chiffrierung).

Mit einer austauschbaren Chipkarte, z.B. einer SIM-Karte stellen Mobilfunkanbieter Teilnehmern mobile Telefonanschlüsse und Datenanschlüsse zur Verfügung. Die Chipkarte ist durch eine veränderbare PIN (nicht die PIN der Vermittlungszentrale!) vor unbefugter Benutzung geschützt. Sie dient außerdem zum Speichern von temporären, netzbezogenen Daten und bevorzugten und gesperrten Netzen. Darüber hinaus können ein Telefon- und Notizbuch, Speicher für Short-Message-Service-Mitteilungen (SMS) und Speicher der zuletzt gerufenen Telefonnummern in der Chipkarte integriert sein. Beispielsweise umfasst eine SIM-Karte eine I/O-Einheit, die den Zugriff auf die SIM-Karte regelt. Sie ist die Schnittstelle der CPU der SIM-Karte zum mobilen Endgerät. Die CPU dient hauptsächlich der Speicherverwaltung, sie kann allerdings auch kleine Programme ausführen. Der Speicher besteht aus einem ROM, einem RAM und einem nur EEPROM. Im ROM ist das Betriebssystem der Karte abgelegt. Das RAM beinhaltet die gerade gebrauchten Daten, er ist flüchtig. Im EEPROM werden Benutzerdaten abgelegt. Dort können auch geheime Schlüssel abgelegt werden, die für eine Signatur und eine Verschlüsselung der zu übertragenden Daten verwendet werden.

Chipmodule der vorgenannten Art eignen sich für das Ablegen eines geheimen Schlüssels, da ihre Speicher nicht leicht ausgelesen werden können, so dass die Schlüssel dort sicher untergebracht werden können. Ein EEPROM ist ein Nur-Lesespeicher (Electrically Erasable Programmable Read-Only Memory).

Vorzugsweise wird der Schlüssel zum Signieren (ein Schlüsselpaar aus öffentlichem und privatem Schlüssel) in einigen Ausführungsformen auf dem Chipmodul z.B. einer SIM-Karte selbst erstellt, so dass der private Schlüssel das Chipmodul nie verlassen muss. Der öffentliche Schlüssel wird an die Vermittlungszentrale weitergeleitet, die damit die später bei ihr eingehenden Signaturen prüft. Eine Änderung des Schlüssels ist jederzeit möglich. Das Chipmodul müsste dazu nur neue Schlüsselpaare generieren und den öffentlichen Schlüssel an die Vermittlungszentrale übermitteln.

In anderen Ausführungsformen werden die Schlüssel extern erzeugt, falls das Chipmodul z.B. die SIM die Schlüsselgenerierung nicht unterstützt. Diese Ausführungsformen sind aber weniger vorteilhaft, da die Übertragung des Schlüssels auf das Chipmodul mit Sicherheitsmängeln behaftet ist.

Vorzugsweise wird der Teil des Verfahrens, der auf dem mobilen Endgerät abläuft, vollständig von dem Chipmodul z.B. der SIM-Karte durchgeführt. Dies bietet einen besseren Schutz vor Trojanern/Viren.

In anderen Ausführungsformen läuft das Verfahren auf dem Prozessor des mobilen Endgeräts, wobei nur die Verschlüsselung/Signierung von dem Chipmodul z.B. der SIM-Karte durchgeführt wird. Da der private Schlüssel nie die SIM-Karte verlassen darf, kann das Signieren nicht von dem Prozessor des Mobiltelefons durchgeführt werden.

Im Zusammenhang mit der vorliegenden Erfindung ist eine Kennung zum Beispiel eine PIN (Persönliche Identifikationsnummer), d.h. eine nur einer Person (in der Regel der Inhaber des Mobiltelefons) bekannte Zahl, mit der diese sich gegenüber der Vermittlungszentrale authentisieren kann. Im ursprünglichen Sinn besteht eine PIN nur aus Ziffern, im vorliegenden Dokument kann eine PIN (Kennung) jede beliebige Zeichenkette mit einer bestimmten Mindestlänge sein.

Es sei darauf hingewiesen, dass es sich bei der zur Vermittlungszentrale gehörenden PIN nicht um die PIN handelt, die der Benutzer eines Mobiltelefons üblicherweise eingibt, um sich gegenüber im Netz anzumelden, sondern eine PIN, die von der Vermittlungszentrale oder dem Betreiber der Vermittlungszentrale an den Benutzer ausgegeben wird.

Der Begriff "elektronische Signatur" wurde zuerst von der Europäischen Kommission in einem überarbeiteten Entwurf der EU-Richtlinie 1999/93/EG verwendet, um die rechtlichen Regelungen nicht an eine bestimmte Technologie (d.h. kryptographische Signaturverfahren) zu koppeln. Die Richtlinie und die darauf basierenden nationalen Signaturgesetze der Mitgliedsstaaten fassen den Begriff bewusst sehr weit: Elektronische Signaturen sind Daten in elektronischer Form, die anderen elektronischen Daten beigefügt oder logisch mit ihnen verknüpft sind und die der Authentifizierung dienen. In diesem Sinne wird der Begriff auch im Zusammenhang mit der vorliegenden Erfindung betrachtet. Die Definition elektronischer Signaturen umfasst daher neben "digitalen Signaturen" auch andere, nicht auf kryptographischen Methoden oder auf digitalen Zertifikaten basierende Verfahren.

Vorzugsweise erlauben elektronische Signaturen neben der Authentizität der Daten auch die Integrität der Daten zu überprüfen (fortgeschrittene elektronische Signaturen). Derzeit erfüllen jedoch nur auf digitalen Signaturen basierende elektronische Signaturen diese Anforderungen.

Eine digitale Signatur ist ein kryptographisches Verfahren, bei dem zu einer "Nachricht" (d.h. zu beliebigen Daten) eine Zahl (die digitale Signatur) berechnet wird, deren Urheberschaft und Zugehörigkeit zur Nachricht durch jeden geprüft werden können. Digitale Signaturen basieren üblicherweise auf asymmetrischen Kryptosystemen und verwenden folglich ein Schlüsselpaar, das aus einem privaten (geheimen) und einem öffentlichen (nicht geheimen) Schlüssel besteht. Diese Schlüssel werden häufig als privater Signaturschlüssel und öffentlicher Signaturprüfschlüssel bezeichnet. Oftmals findet man dafür die englischen Bezeichnungen Private Key und Public Key.

Aus den zu signierenden Daten und dem privaten Signaturschlüssel wird durch eine eindeutige Rechenvorschrift die Signatur berechnet. Verschiedene Daten müssen mit an Sicherheit grenzender Wahrscheinlichkeit zu einer anderen Signatur führen, und die Signatur muss für jeden Schlüssel einen anderen Wert ergeben.

Bei einer digitalen Signatur wird der private Schlüssel in der Regel nicht direkt auf die Nachricht angewendet, sondern auf deren Hash-Wert, der mittels einer Hash-Funktion (wie z.B. SHA-1) aus der Nachricht berechnet wird. Um Angriffe zu verhindern, muss diese Hash-Funktion kollisionsresistent sein, d.h. es muss praktisch unmöglich sein, zwei Nachrichten zu finden, deren Hashwert identisch ist.

Bei digitalen Signaturen soll es praktisch unmöglich sein, eine Signatur zu fälschen oder verfälschen, oder eine zweite Nachricht zu erzeugen, für die diese Signatur ebenfalls gültig ist. Dies setzt voraus, dass sich der private Schlüssel nicht aus dem öffentlichen Schlüssel berechnen lässt.

Digitale Signaturen, also elektronische Unterschriften, werden üblicherweise mit Hilfe von sogenannten Public-Key-Verfahren realisiert. Das mit Abstand bekannteste und am meisten eingesetzte digitale Signaturverfahren ist RSA. Die Sicherheit von RSA basiert auf der Schwierigkeit, große Zahlen in ihre Primfaktoren zu zerlegen (Faktorisierung).

Das Elgamal-Kryptosystem ist ein Schema zur Verschlüsselung, das auf dem mathematischen Problem des diskreten Logarithmus beruht. Elgamal ist ein asymmetrischer Verschlüsselungsalgorithmus aufbauend auf der Idee des Diffie-Hellman-Algorithmus, der mit diesen diskreten Logarithmen arbeitet. Elgamal kann sowohl zur Signaturerzeugung als auch zum Verschlüsseln verwendet werden. Die Sicherheit des Elgamal-Kryptosystems basiert auf der Annahme, dass diskrete Logarithmen eine Trapdoor-Einwegfunktion darstellen.

Ein weiteres wichtiges Verfahren zum digitalen Signieren ist der Digital Signature Algorithm (DSA), ein Standard der US-Regierung für digitale Signaturen.

Um eine Nachricht zu signieren, wird diese vom Sender mit dem eigenen privaten Schlüssel verschlüsselt. Zum Prüfen entschlüsselt der Empfänger die Nachricht mit dem öffentlichen Schlüssel des Senders und vergleicht diese mit der zusätzlich übermittelten unverschlüsselten Nachricht K. Wenn sie übereinstimmen, ist die Signatur gültig und der Empfänger kann sicher sein, dass derjenige, der das Dokument signiert hat, auch den privaten Schlüssel besitzt und dass niemand seit der Signierung das Dokument geändert hat. Es wird also die Integrität und Authentizität garantiert, vorausgesetzt der private Schlüssel ist wirklich geheim geblieben.

Da asymmetrische Verfahren nicht geeignet sind, um größere Datenmengen zu verarbeiten, wird in der Praxis nicht die Nachricht selbst mit dem privaten Schlüssel verschlüsselt, sondern ein Hash-Wert der Nachricht berechnet. Dieser bildet dann (meist zusammen mit einigen technisch notwendigen Informationen, wie zum Beispiel der Spezifizierung des verwendeten Hashverfahrens) die Eingabe für eine Verschlüsselung mit dem privaten Schlüssel, deren Resultat dann die eigentliche Signatur ist. Der Empfänger kann die so erhaltene Signatur mit dem öffentlichen Schlüssel entschlüsseln und erhält somit den Hash-Wert der ursprünglichen Nachricht. Anschließend kann er selber den Hash-Wert der ihm vorgelegten Nachricht bestimmen und mit dem mittels des öffentlichen Schlüssels berechneten Hash-Wert vergleichen. Wenn die beiden Hash-Werte übereinstimmen, kann mit hoher Wahrscheinlichkeit davon ausgegangen werden, dass die Nachricht fehlerfrei übertragen wurde und nicht gefälscht ist.

Für eine genauere Diskussion von Public-Key Signaturverfahren, insbesondere deren mathematische Grundlagen, sei zum Beispiel auf Dietmar Wätjen "Kryptographie - Grundlage, Algorithmen, Protokolle", 2. Auflage, 2008, Spektrum Verlag, Seiten 65-130 verwiesen.

Durch Verwenden einer sicheren elektronischen Signatur, die im jeweiligen Einsatzland als rechtsverbindlich angesehen wird, wird die Bezahlung rechtsverbindlich gemacht. Dadurch kann ein späteres Abstreiten oder Anfechten der Zahlung vermieden werden, was für den Händler von großem Vorteil ist, da er empfangene Geldzahlungen nicht wieder zurückzahlen muss.

Der Begriff "Zahlungsquelle" im Sinne dieser Anmeldung umfasst ein Konto Girokonto, Depot etc. bei einem Zahlungsinstitut, insbesondere Kreditkartenorganisation. Der Begriff kann sich auch auf eine Kreditkarte oder Kreditkartennummer oder eine Debitkarte (EC-Karte) beziehen, die wiederum einem Konto zugeordnet sind.

Im Zusammenhang mit der vorliegenden Erfindung fallen unter den Begriff "Zahlungsinstitut" jegliche Unternehmen, die Konten und den Zahlungsverkehr (Abbuchungen/Gutschriften) zwischen Konten verwalten, also insbesondere Kreditinstitute. Unter den Begriff fallen insbesondere auch Kreditkartenorganisationen, die entweder selber Konten verwalten oder mit anderen Kreditinstituten zusammenarbeiten, die dann Konten verwalten.

Bei der Vermittlungszentrale handelt es sich vorzugsweise um eine vertrauenswürdige dritte Partei (Trusted Third Party, kurz TTP), die eine dritte Instanz darstellt, der zwei Parteien (hier der Kunde/Benutzer und der Zahlungsempfänger) vertrauen. Der Einsatz von TTPs setzt voraus, dass diese extrem gut gegen unautorisierte Zugriffe von außen abgesichert sind. Es ist seitens der an dem Zahlungsverfahren teilnehmenden Zahlungsinstitute eine Zertifizierung und regelmäßige Kontrolle der Vermittlungszentrale vorgesehen.

In einigen Ausführungsformen ist die Vermittlungszentrale ein Computersystem im Sinne eines oder mehrer Server (Serverfarm) oder Rechenzentrum, die die eingehenden Daten verarbeitet und weiterleitet. Eine Serverfarm ist eine Gruppe von gleichartigen, vernetzten Server-Hosts, die zu einem logischen System verbunden sind. Sie optimiert die internen Prozesse durch Verteilung der Auslastung zwischen den einzelnen Servern und beschleunigt die Computerprozesse durch Ausnutzung der Kraft mehrerer Server.

Auf dem Server läuft ein Computerprogramm, das den Server entsprechend steuert, um einen reibungslosen Ablauf des Zahlungsverfahrens zu gewährleisten. Daneben kann die Vermittlungszentrale noch weitere Aufgaben erledigen, die nicht durch einen oder mehrere Server erledigt werden können, so dass unter dem Begriff "Vermittlungszentrale" im weiteren Sinne auch der Betreiber der Vermittlungszentrale (Vermittlungszentralenorganisation, Vermittlungszentralenunternehmen) und das dazugehörende Personal incl. der Gebäude verstanden werden kann. In den Ausführungsformen der vorliegenden Erfindung fällt der Vermittlungszentrale die Aufgabe zu, zwischen den beteiligten Kunden, den Händler und den Kreditinstituten die Zahlung abzuwickeln, wobei sie nicht selbst eine Überweisung oder Auszahlung von Geld durchführt.

Das Sicherheitskonzept von Ausführungsbeispielen der vorliegenden Erfindung beruht auf folgenden Prinzipien. Um eine Zahlung durchzuführen, benötigt der Benutzer z.B. sein Mobiltelefon und seine Kennung bzw. PIN. Wie oben bereits beschrieben, ist dies nicht die PIN, mittels derer sich der Benutzer beim Einschalten seines Mobiltelefons der SIM-Karte gegenüber authentifiziert, sondern eine von der Vermittlungszentrale ausgegebene PIN. Diese PIN ist nicht auf dem Mobiltelefon gespeichert und wird nur in verschlüsselter Form übertragen. Eine Übertragung vom Mobiltelefon zur Vermittlungszentrale ist dabei sicherer als eine Übertragung von einem Festnetz-Rechner, da eine drahtlose Verbindung schlechter abgehört werden kann als eine Festnetz-Verbindung. Ein gestohlenes Mobiltelefon ist wertlos ohne PIN, und eine in Erfahrung gebrachte PIN ist wertlos ohne das Mobiltelefon. Ferner muss sich der Benutzer, sobald er dieses Zahlungsverfahren verwendet, nur noch die zur Vermittlungszentrale gehörende (von der Vermittlungszentrale ausgegebene) PIN merken und kann die PINs seiner EC- und Kreditkarten vergessen, da er sie nicht mehr benötigt. Mit anderen Worten ersetzt die von der Vermittlungszentrale ausgegebene PIN die Zugangsdaten (Authentisierungsdaten) der bei Kreditinstituten bestehenden Zahlungsquellen, so dass der Benutzer sie nicht mehr benötigt. Auf der SIM-Karte werden keine geheimen Zugangsdaten/Authentisierungsdaten (wie Kreditkatennummer, EC-PIN) bezüglich der Zahlungsquellen oder Informationen über den Benutzer abgelegt, sondern nur ein Signaturschlüssel.

In dem Fall, dass das Mobiltelefon nicht gestohlen wird, sondern jemand zum Beispiel über einen Trojaner oder eine Bluetooth-Sicherheitslücke alle Daten des Mobiltelefons ausspäht, bietet das Verfahren den Vorteil, dass ein geheimer Schlüssel auf der SIM-Karte abgelegt ist, der nicht ausgelesen werden kann, sondern nur als Schlüssel zur kryptographischen Authentifizierung eingesetzt werden kann. Dies verläuft in Analogie zu dem Verfahren, das der Benutzer durchführt, um sich in einem Mobilfunknetz anzumelden.

Nicht alle momentan existierenden SIM-Karten erlauben das Ablegen eines geheimen Schlüssels, so dass das Verfahren von den Herausgebern von SIM-Karten abhängig ist, die SIM-Karten mit der entsprechenden Funktionalität anbieten.

Die eingesetzten SIM-Karten müssen über ausreichende Fähigkeiten verfügen, um die erforderlichen kryptographischen Schlüssel zu erstellen, zu speichern oder zu verwenden. Geeignete Karten existieren bereits.

Die Vermittlungszentrale agiert als Vermittlungssystem für sichere Kredit- und EC-Kartenzahlung. Die eigentliche Zahlung erfolgt direkt über die Zahlungsinstitute/Kreditinstitute. Das Sicherheitskonzept basiert auf einer digitalen Signatur mit Hardwareschlüssel auf der SIM-Karte in Verbindung mit einer zur Vermittlungszentrale gehörenden PIN. Da keine sensitiven/sicherheitsrelevanten Daten übermittelt werden, wäre auch ein vollständiges Ausspähen folgenlos.

Das in dieser Anmeldung vorgestellte Verfahren bietet die Möglichkeit der Kredit- und EC-Kartenzahlung über das Mobiltelefon. Dabei ist das Verfahren in folgenden Varianten einsetzbar:
1. Zahlung über das Internet in Online-Shops (mit SMS)
2. Sogenannte Peer-to-Peer-Zahlungen, d.h. Zahlungen zwischen gleichgestellten Personen, also zum Beispiel Privatpersonen
3. Sogenannte Peer-to-Cash-Zahlungen, d.h. Bargeld-Transaktionen
4. Zahlungen am Point of Sale, also Ladengeschäften, Gaststätten, Tankstellen etc. und
5. Zahlung über das Internet in Online-Shops (ohne SMS)

In einigen Ausführungsformen der Erfindung nutzt das System die bereits vorhandenen Kredit- oder Debit-Karten. Die eigentliche Zahlung bleibt eine reine Kartenzahlung, so dass die Vermittlungszentrale nur eine Vermittlerfunktion übernimmt. Der Zahlungsstrom geht nicht über die Vermittlungszentrale.

Das Bezahlverfahren ist dabei sicherer als die Zahlung mit einer konventionellen Kreditkarte, sowohl in Bezug auf ein mögliches Ausspähen von Kartendaten als auch im Falle eines Verlusts. Das Zahlverfahren ist dabei genauso schnell oder schneller in der Abwicklung als die Zahlung mit einer konventionellen Kredit- oder EC-Karte. Eine Kreditkarte ist eine Karte zur Zahlung von Waren und Dienstleistungen. Sie ist weltweit einsetzbare, sowohl im realen täglichen Geschäftswie Privatleben als auch im elektronischen Handel. Sie wird entweder von Banken in Zusammenarbeit mit Kreditkartenorganisationen ausgegeben, oder direkt von der Kreditkartenorganisation.

EC (Electronic Cash) ist das Debitkarten-System des Zentralen Kreditausschusses, der Vertretung der kreditwirtschaftlichen Spitzenverbände Deutschlands. Bei Electronic Cash erfolgt eine Kartenzahlung durch Eingabe einer PIN an einem Terminal.

Eine Debitkarte ist eine Bankkarte, die zur bargeldlosen Bezahlung oder zum Abheben von Bargeld am Geldautomaten eingesetzt werden kann. Im Unterschied zu Kreditkarten wird nach dem Kauf das Girokonto des Karteninhabers sofort oder innerhalb weniger Tage belastet.

Das Bezahlverfahren bietet zusätzlich eine Integrierung bestehender Kundenbindungs- und Informationsprogramme sowie den Aufbau eines übergeordneten Kundeninformationsprogramms.

In einigen Ausführungsformen der Erfindung umfasst das Bestimmen einer Zahlungsquelle ein Auswählen einer Zahlungsquelle aus mehreren Zahlungsquellen.

In einigen Ausführungsformen der Erfindung wird neben der Kennung auch ein weiteres Authentisierungsmechanismus, wie zum Beispiel eine Überprüfung der Iris, des Fingerabdrucks, etc., eingesetzt.

In einigen Ausführungsformen der Erfindung umfasst das Zahlungsinstitut ein Kreditinstitut, eine Kreditkartenorganisation oder eine Bank.

In einigen Ausführungsformen der Erfindung umfassen die mehreren auswählbaren Zahlungsquellen mehrere Konten oder mehrere Kreditkarten eines Kunden.

In einigen Ausführungsformen der Erfindung werden neben der PIN auch die Zahlungsdaten verschlüsselt. Dazu ist neben dem Signaturschlüssel ein "Verschlüsselungsschlüssel" auf der SIM-Karte untergebracht. Wie die Signaturerstellung beruht auch die Verschlüsselung vorzugsweise auf Public-Key-Kryptosystemen.

In einigen Ausführungsformen der Erfindung sind die Zahlungsdaten nichtvertrauliche Zahlungsdaten. Darunter fallen im Wesentlichen alle Angaben außer der PIN, die erfindungsgemäß eine geheim zu haltende Information darstellt. Dies bedeutet, dass vertrauliche Zahlungsdaten, wie zum Beispiel die Kreditkartennummer, nicht an die Vermittlungszentrale übertragen werden.

In einigen Ausführungsformen der Erfindung wird die PIN von der Vermittlungszentrale (bzw. vom Betreiber der Vermittlungszentrale) ausgegeben. Das Ausgeben kann insbesondere dadurch erfolgen, dass der Kunde seine PIN in einem Brief postalisch zugestellt bekommt.

In einigen Ausführungsformen der Erfindung ist der auf der SIM-Karte abgelegte Schlüssel ein privater Schlüssel und die Vermittlungszentrale verfügt über den zugehörigen öffentlichen Schlüssel zur Überprüfung der Signatur

In einigen Ausführungsformen der Erfindung umfasst das Verfahren ein Gutschreiben des Geldbetrags dem Empfänger der Zahlung. In einigen dieser Ausführungsformen erhält der Empfänger der Zahlung zusätzlich eine Bestätigung der Zahlung von der Vermittlungszentrale.

In anderen Ausführungsformen der Erfindung stellt die Zahlungsquelle eine Angabe eines Kontos bei einem Zahlungsinstitut, zum Beispiel einer Bank oder einer Kreditkartenorganisation, oder eine Kreditkarte bzw. Kreditkartennummer dar.

In einigen Ausführungsformen der Erfindung ist die Vermittlungszentrale eine vertrauenswürdige dritte Partei ist. Die Vertrauenswürdigkeit der Vermittlungszentrale ist von großer Bedeutung, da alle an dem Bezahlverfahren teilnehmenden Parteien (Kunden, Händler, Kreditinstitute) der Vermittlungszentrale vertrauen müssen, da sie die Kreditinstitute anweist, Geldbeträge zu überweisen.

In einigen Ausführungsformen der Erfindung werden die Zahlungsdaten und die Kennung (PIN) anhand der elektronischen Signatur in der Vermittlungszentrale überprüft.

In einigen Ausführungsformen wird die PIN (in entschlüsselter Form) überprüft. Dieser Vorgang bezieht sich darauf zu prüfen, ob die erhaltene PIN zu einer Person gehört, die in der Vermittlungszentrale als Teilnehmer an dem Zahlverfahren registriert ist.

In einigen Ausführungsformen wählt der Benutzer über ein im Display seines Mobiltelefons angezeigtes Auswahlmenü eine Zahlungsquelle aus.

In einigen Ausführungsformen der Erfindung kann ein Benutzer nur unter jenen Zahlungsquellen auswählen kann, die ein Zahlungsempfänger für eine jeweilige Zahlung akzeptiert. Dem Benutzer werden in diesen Ausführungsformen nur jene Konten/Kreditkarten etc. im Display seines Mobiltelefons angezeigt, die er für eine Zahlung bei einem entsprechenden Händler oder Zahlungsempfänger verwenden kann. Dies kann dann erforderlich sein, wenn der Zahlungsempfänger nicht alle Kreditkarten akzeptiert, die der Benutzer bei dem Bezahlsystem angemeldet hat.

In einigen Ausführungsformen werden die signierten Zahlungsdaten und die signierte, verschlüsselte PIN zusammen mit einem Zeitstempel an die Vermittlungszentrale übermittelt.

In einigen Ausführungsformen geschieht das Übermitteln an die Vermittlungszentrale über eine IP-Verbindung. Grundsätzlich ist aber jede Art von Datenverbindung denkbar, wie z.B. SMS oder E-Mail.

### 1. Variante: Zahlung über das Internet im Online-Shop (mit SMS):

In einigen Ausführungsformen der Erfindung wird das Zahlverfahren in einem Online-Shop eingesetzt. Zunächst gibt der Benutzer auf einer Webseite, in der Regel die Webseite des Online-Shops, eine sein mobiles Endgerät identifizierende Zeichenkette in eine Eingabemaske (Eingabeschnittstelle) ein. Die Zeichenkette wird an den Empfänger des Geldbetrags übermittelt. Daraufhin empfängt das Mobiltelefon des Benutzers per SMS, Bluetooth-, NFC-, (Near Field Communication, siehe unten) oder IP-Datenübertragung relevante Zahlungsdaten von der Vermittlungszentrale. In einigen Ausführungsformen dieser Variante ist der Benutzer in der Lage, sofern er mehrere Zahlungsquellen in dem System verfügbar hat, zwischen den Zahlungsquellen zu wählen. Der Benutzer bestätigt die Zahlung durch Eingabe der zur Vermittlungszentrale gehörenden Kennung. Der Händler des Online-Shops bekommt von der Vermittlungszentrale eine Bestätigung über die erfolgreiche Zahlung und zeigt dies dem Kunden an.

In einigen Ausführungsformen der Erfindung gibt der Benutzer statt der Telefonnummer seines Mobiltelefons eine anonyme Identifikationszeichenkette ein.

Es werden keine Kreditkartendaten an den Händler oder über das Internet vermittelt. Ferner müssen keine sicherheitsrelevanten Daten auf dem PC eingegeben werden, daher können selbst Trojaner und Viren keine Kreditkartendaten ausspähen. Ein sicheres Einkaufen, auch von Internet-Cafés oder anderen fremden PCs aus ist problemlos möglich. Außerdem muss sich der Kunde nicht bei jedem Internet-Angebot von neuem darüber Gedanken machen, ob dem jeweiligen Händler zu trauen ist. Ferner kann die gesamte Online-Abwicklung auf der Webseite des Händlers geschehen. Ein weiterer Vorteil für den Händler ist, dass er keine besonderen Sicherheitsvorkehrungen für die Kreditkartenabwicklung treffen muss. Außerdem muss keine Verantwortung für die Speicherung von Kreditkartendaten übernommen werden.

Eine Zahlung kann nur vornehmen, wer sowohl PIN kennt, als auch im Besitz z.B. eines Mobiltelefons ist. Auf dem Mobiltelefon (insbesondere auf der SIM-Karte) werden keine Zahlungs- oder Kartendaten oder PINs gespeichert.

Wie oben beschrieben, wird auf der SIM-Karte ein privater Schlüssel abgelegt, mit dem Transaktionen signiert werden. Er dient als Beweis, dass der Zahlende/Benutzer auch Besitzer des Telefons ist. Ein Auslesen - z.B. durch Trojaner oder Viren - ist technisch unmöglich. Dies ist ein Vorteil des Ablegens von geheimen Schlüsseln auf der SIM-Karte des Mobiltelefons. Selbst dem Händler werden keine Kartendaten übermittelt, sondern diese werden direkt an das Kreditinstitut übergeben. Der Händler bekommt lediglich eine Zahlungsbestätigung.

### 2. Variante: Peer-to-Peer-Zahlung

Einige Ausführungsformen der Erfindung beziehen sich auf eine Peer-to-Peer Zahlung. Dabei wird ein Geldbetrag nicht einem Online-Händler überwiesen, sondern einer anderen Privatperson. Der Zahlungsempfänger ist in diesen Ausführungsformen eine ein zweites Mobiltelefon besitzende Person, d.h. eine andere Person als der Zahler, die ebenfalls ein Mobiltelefon besitzt. In diesen Ausführungsformen umfasst das Verfahren davor ferner ein Eingeben einer das zweite mobile Endgerät identifizierenden Zeichenkette in das (erste) Mobiltelefon. Wie oben beschrieben, wählt der Benutzer dann eine Zahlungsquelle aus mehreren Zahlungsquellen aus. Er bestätigt die Zahlungsdaten, welche die Angabe der ausgewählten Zahlungsquelle umfassen, mittels einer zu einer Vermittlungszentrale gehörenden PIN. Dann werden die Zahlungsdaten und die verschlüsselte PIN mittels des auf der SIM-Karte abgelegten geheimen Schlüssels signiert. Die Verschlüsselung der PIN kann ebenfalls durch einen auf der SIM-Karte abgelegten Schlüssel erfolgen. Anschließend werden diese signierten Daten an die Vermittlungszentrale übertragen. Die Vermittlungszentrale überprüft die Zahlungsdaten und die PIN mit Hilfe der digitalen Signatur. Die Vermittlungszentrale übermittelt wiederum eine Nachricht an die ausgewählte Zahlungsquelle oder ein zur ausgewählten Zahlungsquelle gehörendes Kreditinstitut, den Geldbetrag an den Empfänger zu transferieren. Danach erhält der Zahlungsempfänger optional eine Bestätigung per SMS, das das Geld seinem Konto gutgeschrieben wurde.

### 3. Variante: Peer-to-Cash

Diese Variante kann als eine Untervariante der 2. Variante betrachtet werden. In dieser Variante wird das Geld nicht an den Empfänger überwiesen, sondern der Empfänger kann das Geld bar in Empfang nehmen.

In einigen Ausführungsformen der Erfindung soll der Geldbetrag bar an den Empfänger ausbezahlt werden. In diesen Ausführungsformen beginnt das Verfahren wieder damit, dass der Benutzer eine das zweite mobile Endgerät identifizierende Zeichenkette in sein Mobiltelefon eingibt. Danach hat er die Möglichkeit, eine Zahlungsquelle zu bestimmen, aus der der Geldbetrag überwiesen werden soll. Er bestätigt die Zahlungsdaten mittels Eingabe seiner zur Vermittlungszentrale gehörenden Kennung. Anschließend werden die Zahlungsdaten einschließlich der Kennung mit einer Public-Key-Signatur signiert und an die Vermittlungszentrale übermittelt. Dort werden die Daten mittels der Kennung und der Signatur überprüft. Der Empfänger erhält per SMS oder IP-Übertragung ein im Display seines Mobiltelefons sichtbares, maschinenlesbares Muster(z. B. einen Barcode). Mit diesem Barcode kann er sich an einen Händler (Auszahler) wenden, der ein Kassensystem mit Scanner hat, das den Barcode lesen kann. Nachdem der Barcode gescannt wurde, wird der Geldbetrag in bar an den Empfänger ausbezahlt. Danach wird der Geldbetrag dem Händler (Auszahler) gutgeschrieben.

In einigen Ausführungsformen der Erfindung kann der Benutzer sich das Bargeld auch an sich selbst auszahlen lassen. In diesen Ausführungsformen ist das erste mobile Endgerät und das zweite mobile Endgerät identisch und der Benutzer gibt seine eigene Telefonnummer ein.

### 4. Variante: Zahlung am Point of Sale

In einigen Ausführungsformen der Erfindung bezieht sich das Verfahren auf Zahlungen am Point of Sale - also in Kaufhäusern, Tankstellen etc. Der Kunde braucht dabei keine Kredit- oder EC-Karte mehr vorzulegen, sondern der Zahlvorgang wird ausschließlich über das Mobiltelefon abgewickelt. Das eingesetzte Kassensystem muss dazu mit der Vermittlungszentrale verbunden bzw. integriert werden. Die drahtlose Bluetooth- oder NFC-Technologie wird zur kostenfreien Kommunikation zwischen dem Mobiltelefon und dem Kassensystem - und über dieses mit der Vermittlungszentrale - eingesetzt.

In diesen Ausführungsformen umfasst das Übermitteln der signierten Zahlungsdaten und der verschlüsselten, signierten Kennung an die Vermittlungszentrale ein Übermitteln der signierten Zahlungsdaten und der signierten, verschlüsselten Kennung über eine Bluetooth- oder NFC-Verbindung an den Empfänger und dann ein Übermitteln des verschlüsselten Datenpakets (Zahlungsdaten und Kennung) vom Empfänger an eine Vermittlungszentrale.

Bluetooth ist ein in Industriestandard gemäß IEEE 802.15.1 für die Funkvernetzung von Geräten über kurze Distanz. Bluetooth bildet dabei die Schnittstelle, über die sowohl mobile Kleingeräte wie Mobiltelefone und PDAs als auch Computer und Peripheriegeräte miteinander kommunizieren können. Hauptzweck von Bluetooth ist das Ersetzen von Kabelverbindungen zwischen Geräten.

In einigen Ausführungsformen der Erfindung umfasst das Verfahren davor ferner ein Aktivieren eines Zahlungsmodus am Mobiltelefon, ein Anzeigen einer Bluetooth- oder NFC-Kennung als maschinenlesbares Muster (z.B. Barcode) im Display des mobilen Endgeräts. Dann wird der Barcode durch einen Scanner des Empfängers gescannt und Übermitteln von Zahlungsdaten an das Mobiltelefon über eine Bluetooth-Verbindung.In anderen Ausführungsformen wird anstelle der Bluetooth-Technologie der NFC (Near Field Communication)-Standard eingesetzt. NFC ist ein Übertragungsstandard zum kontaktlosen Austausch von Daten über kurze Strecken. NFC ermöglicht den Austausch verschiedener Informationen, wie z. B. Telefonnummern, Bilder, MP3-Dateien oder digitale Berechtigungen zwischen zwei Geräten, die nahe aneinander gehalten werden. Eine primäre Anwendungsmöglichkeit von NFC betrifft Bezahlverfahren per Mobiltelefon. Benutzer können mittels Mobiltelefon bezahlen, indem sie dieses nahe an ein Zahlungsterminal (Kassensystem) halten.

In einigen dieser Ausführungsformen ist der Empfänger ein Händler und das Mobiltelefon befindet sich bei der Bezahlung in der Nähe eines Kassensystems des Händlers.

Die Ausführungsformen, die sich zur Verwendung am Point of Sale eignen, bieten eine erhöhte Sicherheit. Kartendaten werden nicht an Dritte (auch nicht an Händler) weitergegeben. Der Benutzer muss auch keine Kreditkarten mehr mitnehmen. Der Benutzer hat eine übersichtliche Kostenkontrolle. Ein weiterer Vorteil ist, dass der Kunde keinen fremden Eingabegeräten mehr vertrauen muss. Das Risiko manipulierter Kartenterminals entfällt.

### 5. Variante: Offline-Zahlung (ohne Datenverbindung oder SMS)

Einige Ausführungsformen der Erfindung beziehen sich auf ein Verfahren zur Zahlung eines Geldbetrags über ein ein Chipmodul enthaltendes mobiles Endgerät an einen Empfänger. Das Verfahren umfasst ein Eingeben von Zahlungsdaten, die eine Angabe einer Zahlungsquelle umfassen, und eines zu einer Vermittlungszentrale gehörenden Kennung auf einem mobilen Endgerät. Dann wird ein Bestätigungscode auf der Grundlage der Kennung, der Zahlungsdaten und eines Zeitstempels durch das mobile Endgerät berechnet. Die Zahlungsdaten, eine das mobile Endgerät identifizierende Zeichenkette und der Bestätigungscode werden von einem Zahlungsempfänger an die Vermittlungszentrale vermittelt. Schließlich wird eine Nachricht von der Vermittlungszentrale an ein Zahlungsinstitut übermittelt, das zur ausgewählten Zahlungsquelle gehört oder die ausgewählte Zahlungsquelle darstellt, den Geldbetrag von der Zahlungsquelle abzubuchen.

In einigen der Ausführungsformen dieser Variante ist der Zahlungsempfänger ein Online-Shop.

In einigen Ausführungsformen wählt der Benutzer eine aus mehreren möglichen Zahlungsquellen aus. Die Zahlungsquellen stellen die dem Benutzer zur Verfügung stehenden Konten, Depots etc. dar.

In einigen dieser Ausführungsformen findet als nach Erhalt der Zahlungsdaten, der das mobile Endgerät identifizierenden Zeichenkette und des Bestätigungscodes durch die Vermittlungszentrale ein Überprüfen der Zahlungsdaten und des Bestätigungscodes durch die Vermittlungszentrale statt.

In einigen Ausführungsformen ist der Bestätigungscode ein Hash (z.B. MD5 oder SHA1) über die Zahlungsdaten (Händler, Betrag, Währung, Kreditkarte), Datum/Zeit und zusätzlich ein mit der Vermittlungszentrale geteiltes Geheimnis (Salt). Der errechnete Hash wird anschließend noch in eine "benutzerfreundliche" Zeichenkette umgewandelt. Dabei ist ein Kompromiss zwischen aus kryptographischer Sicht ausreichender Länge und für den Benutzer zumutbarer Länge zu finden. (Im Grunde also ein zweiter Hash über den ersten, dessen Ergebnis von einem Benutzer leicht ablesbar und eingebbar ist.)

In einigen Ausführungsformen der Erfindung findet am Ende ein Bestätigen der Zahlung dem Empfänger durch die Vermittlungszentrale statt.

In einigen Ausführungsformen der Erfindung sind die Zahlungsdaten nichtvertrauliche Zahlungsdaten, die ohne Sicherheitsrisiko übermittelt werden dürfen.

In einigen Ausführungsformen der Erfindung wird die Kennung von der Vermittlungszentrale an einen Benutzer ausgegeben.

In einigen Ausführungsformen der Erfindung umfasst die Zahlungsquelle eine Angabe betreffend eines Kreditinstituts, einer Kreditkarte, eine Kreditkartenorganisation, einer EC-Karte oder eines Kontos.

In einigen Ausführungsformen der Erfindung ist die Vermittlungszentrale eine vertrauenswürdige dritte Partei.

Einige Ausführungsformen beziehen sich auf ein Computerprogramm, das entweder in der Form eines maschinenlesbaren Medium ist mit Programmcode, der darauf gespeichert ist, oder in der Form eines propagierten Signals, das eine Darstellung eines Programmcodes umfasst, wobei der Programmcode ausgelegt ist, ein Verfahren zur Zahlung eines Geldbetrags auszuführen, wenn er auf einem als Vermittlungszentrale verwendeten Computersystem ausgeführt wird, wobei das Verfahren umfasst: Empfangen von signierten Zahlungsdaten, die eine vom Benutzer bestimmte Zahlungsquelle umfassen, Empfangen einer zur Vermittlungszentrale gehörenden, verschlüsselten Kennung, die zur Bestätigung der Zahlungsdaten von dem mobilen Endgerät aus übermittelt wurde; Überprüfen der Zahlungsdaten und der verschlüsselten Kennung anhand der elektronischen Signatur auf ihre Authentizität hin; Überprüfen der entschlüsselten Kennung, und Übermitteln einer Nachricht an die ausgewählte Zahlungsquelle oder ein zur bestimmten Zahlungsquelle gehörendes Zahlungsinstitut, den Geldbetrag von der Zahlungsquelle abzubuchen.

Andere Ausführungsformen der Erfindung beziehen sich auf ein Computersystem zur Verwendung als Vermittlungszentrale, auf dem das obige Computerprogramm installiert ist.

Einige Ausführungsformen der Erfindung beziehen sich auf ein Computerprogramm, das entweder in der Form eines maschinenlesbaren Medium ist mit Programmcode, der darauf gespeichert ist, oder in der Form eines propagierten Signals, das eine Darstellung eines Programmcodes umfasst, wobei der Programmcode ausgelegt ist, ein Verfahren zur Zahlung eines Geldbetrags auszuführen, wenn er auf einem ein Chipmodul enthaltendes mobiles Endgerät ausgeführt wird, wobei das Verfahren umfasst: Ermöglichen dem Benutzer, eine Zahlungsquelle zu bestimmen, Ermöglichen dem Benutzer, Zahlungsdaten, die die bestimmte Zahlungsquelle umfassen, durch Eingeben einer zur Vermittlungszentrale gehörenden Kennung zu bestätigen, elektronisches Signieren der Zahlungsdaten und der signierten, verschlüsselten Kennung mittels eines auf dem Chipmodul abgelegten Schlüssels, und Übermitteln der signierten Zahlungsdaten und der signierten, verschlüsselten Kennung an die Vermittlungszentrale.

Der Kunde (Benutzer) lädt das Computerprogramm wie folgt auf sein Mobiltelefon. Smartphones, insbesondere Blackberrys, bringen von Hause aus eine Funktion für den Datenaustausch mit, so dass darauf nicht näher eingegangen werden muss. Das Computerprogramm, das zum Beispiel online angeboten wird, wird auf einen PC geladen. Wenn sowohl PC als auch Mobiltelefon eine Infrarot- oder Bluetooth-Schnittstelle besitzen, lässt sich die Programmdatei darüber auf das Mobiltelefon spielen. Ferner lässt sich die Programmdatei mit einem für das Mobiltelefon passenden Datenkabel vom PC auf das Mobiltelefon verschieben. Das Computerprogramm kann auch direkt von der Webseite auf das Mobiltelefon geladen werden, ohne den Zwischenschritt vom PC auf das Mobiltelefon.

Wiederum andere Ausführungsformen der Erfindung beziehen sich auf ein mobiles Endgerät, auf dem das Computerprogramm installiert ist.

Das Computerprogramm kann aber auch in Form eines Chipmoduls (z.B. SIM-Karte) erworben werden und in ein mobiles Endgerät eingeschoben werden, so dass keine Installation durch den Benutzer notwendig sein wird. Aus Sicherheitsgründen ist diese Lösung zu bevorzugen. Deshalb beziehen sich einige Ausführungsformen der Erfindung auf ein Chipmodul, auf der das Computerprogramm abgelegt ist und die ausgelegt ist, das Computerprogramm auszuführen.

Einige Ausführungsformen betreffen ein System zur Zahlung eines Geldbetrags. Das System umfasst eine Vermittlungszentrale und ein ein Chipmodul enthaltendes mobiles Endgerät. Das mobile Endgerät ist ausgelegt, dem Benutzer zu ermöglichen, eine Zahlungsquelle zu bestimmen und die bestimmte Zahlungsquelle umfassende Zahlungsdaten durch Eingeben einer zur Vermittlungszentrale gehörenden Kennung zu bestätigen. Die Zahlungsdaten und die verschlüsselte Kennung werden mittels eines aus dem Chipmodul abgelegten Schlüssels signiert und die signierten Zahlungsdaten und die signierte, verschlüsselte Kennung an die Vermittlungszentrale übermittelt. Die Vermittlungszentrale ist ausgelegt, eine Nachricht von der Vermittlungszentrale an einer zur bestimmten Zahlungsquelle gehörendes Zahlungsinstitut zu übermitteln, den Geldbetrag von der Zahlungsquelle abzubuchen.

Einige Ausführungen des Computerprogramms (Computerprogrammprodukts) mit Programmcode zum Ausführen der beschriebenen Verfahren umfassen ein beliebiges maschinenlesbares Medium, das in der Lage ist, den Programmcode zu speichern oder zu codieren. Der Begriff "maschinenlesbares Medium" soll dementsprechend so aufgefasst werden, dass er zum Beispiel Festspeicher und entfernbare und nicht entfernbare optische und magnetische Speichermedium umfasst. In weiteren Ausführungsformen ist das Computerprogramm in der Form eines propagierten Signals, das eine Darstellung des Programmcodes umfasst, was zunehmend der übliche Weg wird, um Software zu vertreiben. Das Signal wird zum Beispiel auf einer elektromagnetischen Welle getragen, z.B. über ein Kupferkabel oder über die Luft übertragen, oder eine Lichtwelle, die durch eine optische Faser übertragen wird. Der Programmcode kann Maschinencode oder ein anderer Code sein, der in Maschinencode konvertiert werden kann, wie zum Beispiel als Quellcode in einer Mehrzweckprogrammiersprache, z.B. C, C++, Java, C#, etc. Die Ausführungsformen eines Computersystems können kommerziell verfügbare Allzweckcomputer sein, die mit dem Programmcode programmiert sind.

Selbstverständlich ist es möglich, eines oder mehrere der Merkmale, die in Zusammenhang mit einer der Varianten der Erfindung vorgestellt wurden mit einer anderen Variante zu kombinieren, so dass sich Mischformen ("Hybrid-Varianten") ergeben. (Dies gilt insbesondere für Merkmale der abhängigen Ansprüche, die einer Varianten zugeordnet wurden.) Diese Mischformen der Varianten seien hiermit ebenfalls offenbart.

Kehrt man nun zum Ausführungsbeispiel von Fig. 1 zurück, so sieht man dort einen Benutzer 1, der gerade über das Internet die Webseite 2 eines Online-Shops 3 besucht. Der Online-Shop 3 ist eine Web-Anwendung, die der Server 4 eines Händlers 5 dem Benutzer 1 über das Internet bereitstellt. In einer Eingabemaske 6 des Online-Shops wird dem Benutzer 1 der Betrag angezeigt, den er für ein gekauftes Produkt zu zahlen hat. Der Benutzer 1 gibt daraufhin in die Eingabemaske 6 die Telefonnummer seines Mobiltelefons 7 ein und erhält anschließend von einer Vermittlungszentrale 8 die relevanten Zahlungsdaten 15 (wie Geldbetrag, gekauftes Produkt, Name des Händlers, etc.) per SMS auf sein Mobiltelefon 7 geschickt. Dort kann er die Zahlungsdaten 15 im Display 10 seines Mobiltelefons 7 überprüfen und kann ferner über ein Auswahlmenu 13 eine Zahlungsquelle 14.1, 14.2 auswählen. Im vorliegenden Fall hat der Benutzer 1 zwei Zahlungsquellen 14.1 und 14.2 zur Verfügung. Eine Kreditkarte, die über ein Konto 14.1 bei Kreditinstitut KI_1 9.1 läuft und ein Konto bei Kreditinstitut Kl_2, auf das er per EC-Karte Zugriff hat. Der Benutzer 1 wählt im im Display 10 angezeigten Auswahlmenü 13 seines Mobiltelefons 7 eine der Zahlungsquellen 14.1, 14.2 aus und bestätigt diese und die übrigen Zahlungsdaten 15 durch Eingabe einer PIN 11, die ihm von der Vermittlungszentrale 8 mitgeteilt wurde.

Dabei wird dem Benutzer 1 im Auswahlmenü 13 seines Mobiltelefons 7 alle seine Kreditkarten/Konten bei verschiedenen Kreditinstituten 9.1, 9.2 angezeigt, von denen aus er die Abbuchung eines Geldbetrags durchführen kann und die er zur Verwendung durch das Bezahlsystem bei der Vermittlungszentrale 8 angemeldet hat. Wie oben bereits erwähnt, geschieht in einigen Ausführungsformen das Auswählen über ein Auswählmenü 13, das nur diejenigen Zahlungsquellen des Kunden anzeigt, die ein Zahlungsempfänger (hier: Händler 5) als Zahlungsquelle akzeptiert. In diesen Fällen findet vorab, z.B. wenn die Zahlungsdaten 15 per SMS an das Mobiltelefon 7 übermittelt werden, eine Kommunikation zwischen die Vermittlungszentrale 8 und dem Mobiltelefon 7 statt, in der dem Mobiltelefon 7 die zur Verfügung stehenden Zahlungsquellen angezeigt werden.

Die PIN 11 wird daraufhin mittels eines öffentlichen Schlüssels der Vermittlungszentrale 8 verschlüsselt, und die Zahlungsdaten 15 (die nun auch die Auswahl der Zahlungsquelle umfassen) und die verschlüsselte PIN 11' werden mittels eines auf der SIM-Karte 12 des Mobiltelefons 8 abgelegten privaten Schlüssels 16 digital signiert. Dieses digitale Signieren geschieht mit einem privaten Signatur-Schlüssel 16 eines Public-Key-Signaturverfahrens, der auf der SIM-Karte 12 sicher abgelegt ist. Dieses Datenpaket 19 wird nun per Mobiltelefon 7 über das Mobilfunknetz an die Vermittlungszentrale 8 übermittelt. Dort wird als erstes die empfangene Zahlungsdaten 15 und die PIN 11' mit Hilfe der digitalen Signatur mittels des zugehörigen öffentlichen Signatur-Schlüssels des Mobiltelefons 7 auf Authentizität und Integrität hin überprüft, und die PIN 11 wird mit dem zum öffentlichen Schlüssel gehörenden privaten Schlüssel der Vermittlungszentrale 8 entschlüsselt. Dadurch, dass die Signatur stimmt, erkennt die Vermittlungszentrale 8, dass das Datenpaket 19 bei der Übertragung nicht verändert wurde und tatsächlich von dem Mobiltelefon 7 kam. Durch die PIN 11 kann sie sicherstellen, dass der Kauf tatsächlich von einem Kunden getätigt wurde, der bei dem Zahlverfahren registriert ist. Anhand der Zahlungsdaten 15 erkennt die Vermittlungszentrale 8, wer der Empfänger des Geldbetrags ist und welche der verfügbaren Zahlungsquellen 9.1, 9.2 der Benutzer gewählt hat. Im vorliegenden Beispiel wurde die Kreditkarte, welche über das Konto 14.1 bei KI_19.1läuft, als Zahlungsquelle 14.1 ausgewählt. Deshalb schickt die Vermittlungszentrale 8 nun auf sicherem Weg (z.B. die Internetprotokolle SSL oder HTTPS, oder eine dedizierte Leitung (also nicht über das Internet)) eine Nachricht 17 an das Kreditinstitut KI_1, den gewünschten Geldbetrag an den Händler 5, dessen Kontoverbindung der Vermittlungszentrale 8 ebenfalls bekannt ist, zu überweisen. Das Kreditinstitut KI_1 überweist nun den Geldbetrag auf das Konto 14.3 des Händlers 5 bei Kreditinstitut KI_3. Als letztes wird an den Server 4 des Händlers 5 eine Bestätigungsnachricht 18 gesendet, dass die Zahlung erfolgreich war.

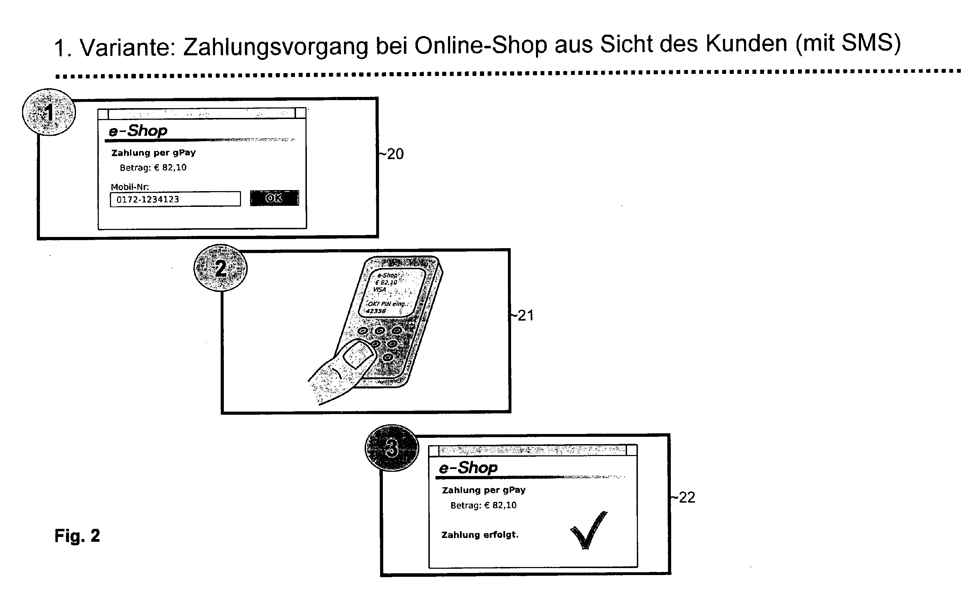

Fig. 2 veranschaulicht die Zahlung in dem Online-Shop 3 aus Sicht des Kunden/Benutzers 1 (mit SMS) gemäß der ersten Variante der Erfindung.

Bei 20 gibt der Kunde für die Zahlung im Online-Shop seine Mobilnummer an. Bei 21 empfängt das Mobiltelefon 7 im Hintergrund per SMS (oder E-Mail) die relevanten Zahlungsdaten 15 von der Vermittlungszentrale 8. Dadurch wird die Zahlungsanwendung aktiviert. Der Kunde 1 wählt nun eine der ihm zur Verfügung stehenden Zahlungsquellen 14.1, 14.2 aus und bestätigt die Zahlung durch Eingabe seiner PIN 11. Bei 22 bekommt der Händler 5 von der Vermittlungszentrale 8 eine Bestätigung 18 über die erfolgreiche Zahlung und zeigt dies dem Kunden 1 an.

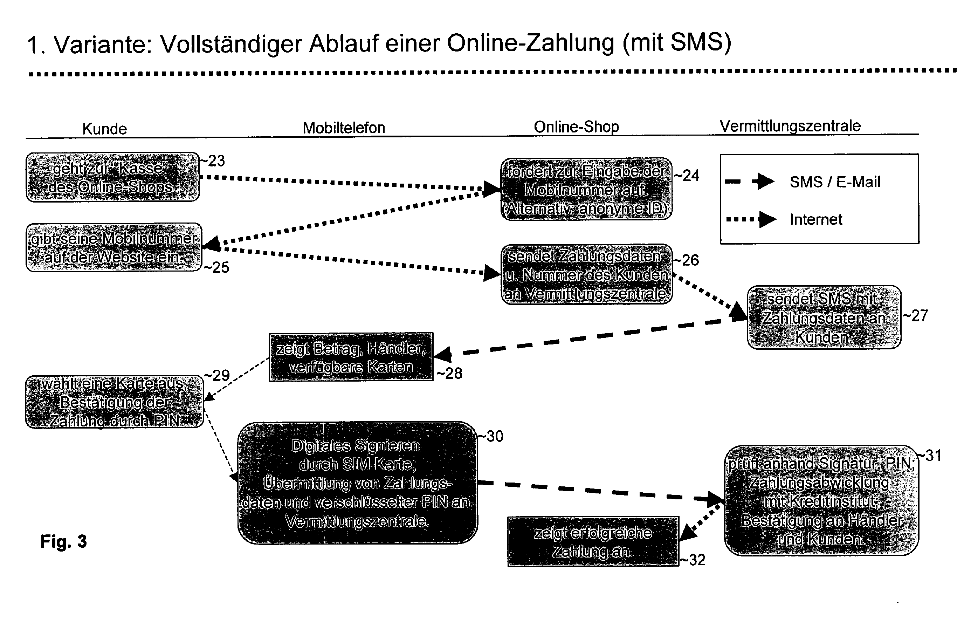

Fig. 3 veranschaulicht den vollständigen Ablauf des Zahlvorgangs einer Zahlung im Online-Shop 3. Bei 23 geht der Kunde zur virtuellen Kasse des Online-Shops 3. Bei 24 wird der Kunde aufgefordert, seine Mobilnummer in die Eingabemaske einzugeben. Alternativ dazu kann er eine anonyme Identifikationsnummer angeben, die ebenfalls sein Mobiltelefon 7 eindeutig identifiziert. Bei 25 gibt der Kunde seine Mobilnummer auf der Webseite 2 des Online-Shops 3 sein, die an den Online-Shop 3 übertragen werden. Bei 26 sendet der Online-Shop 3 die Zahlungsdaten 15 (Geldbetrag, Händler etc.) und die Mobilnummer des Kunden an die Vermittlungszentrale 8. Bei 27 sendet die Vermittlungszentrale 8 eine SMS mit den Zahlungsdaten 15 an das Mobiltelefon 7 des Kunden. Bei 28 zeigt das Mobiltelefon 7 den Geldbetrag, den Händler 5, und verfügbare Zahlungsquellen (hier: Kreditkarten) an. Der Kunde wählt bei 29 eine der verfügbaren Kreditkarten auf dem Display seines Mobiltelefons 7 aus und bestätigt die Zahlungsdaten 15 durch Eingabe einer zur Vermittlungszentrale 8 gehörenden PIN 11. Anschließend werden bei 30 die Zahlungsdaten 15 und die verschlüsselte PIN 11' digital signiert. Die signierten Daten 19 werden von dem Mobiltelefon 7 an die Vermittlungszentrale 8 übermittelt. Bei 31 prüft die Vermittlungszentrale 8 die empfangenen Daten mittels der angehängten elektronischen Signatur und entschlüsselt die PIN 11'. Es folgt dann die Zahlungsabwicklung mit dem Kreditinstitut, das zur Kreditkarte gehört, welche der Kunde bei 29 ausgewählt hat. Das Kreditinstitut 9.1 überweist den Geldbetrag auf das Konto 14.3 des Händlers. Bei 32 wird auf dem Display 10 des Mobiltelefons 7 die erfolgreiche Zahlung angezeigt.

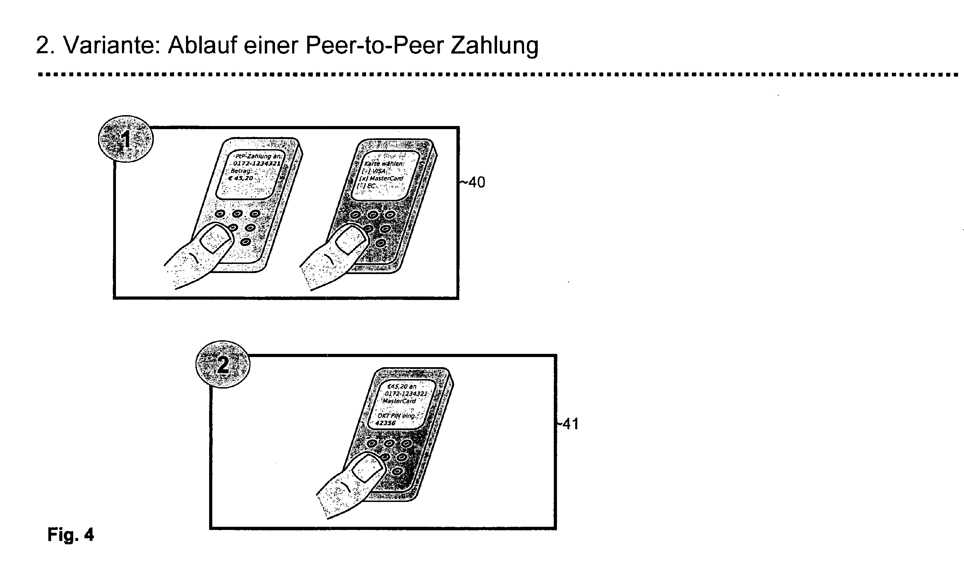

Fig. 4 bezieht sich auf eine direkte Zahlung (z.B. zwischen Privatpersonen), die beide ein Mobiltelefon 7 besitzen und bei einer Vermittlungszentrale 8 angemeldet sind, gemäß einer zweiten Variante der Erfindung. Bei 40 gibt der erste Benutzer die Mobilnummer des zweiten Benutzers auf dem Display 10 seines Mobiltelefons 7 an und wählt eine Zahlungsquelle 14 aus. Bei 41 bestätigt der erste Benutzer die Zahlungsdaten per PIN 11 und die Zahlung wird ausgeführt. Der Geldbetrag wird auf vom Bankkonto des ersten Benutzers 1 abgebucht und dem Bankkonto des Empfängers gutgeschrieben.

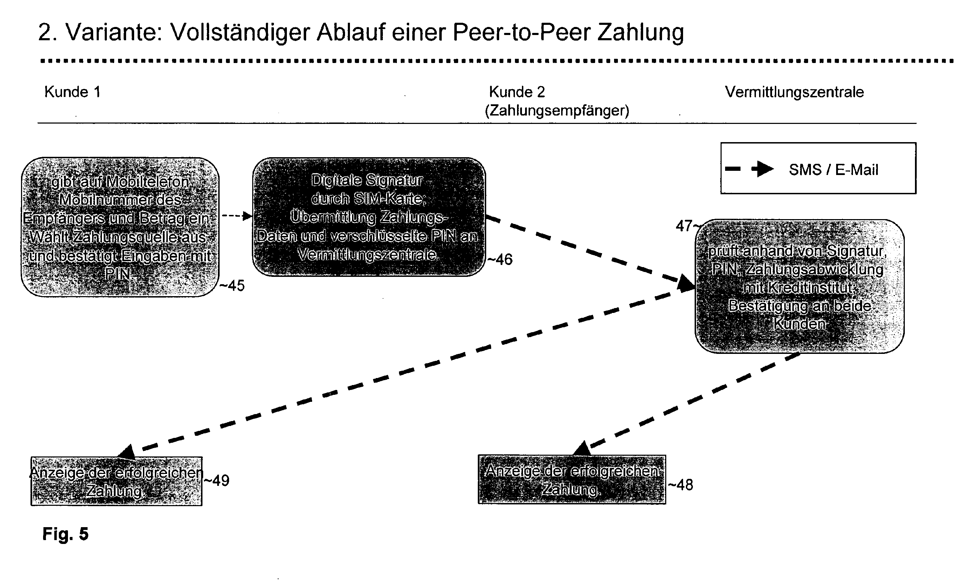

Fig. 5 zeigt einen vollständigen Ablauf einer Peer-to-Peer Zahlung. Bei 45 gibt Kunde 1 auf seinem Mobiltelefon 7 die Mobilnummer des Empfängers, den Geldbetrag und seine von der Vermittlungszentrale 8 zugewiesene PIN 11 in sein Mobiltelefon 7 ein. Bei 46 werden die Zahlungsdaten und die PIN in verschlüsselter Form digital mit Hilfe des auf der SIM-Karte gespeicherten privaten Schlüssels 16 signiert und die Zahlungsdaten 15 und die PIN 11 per SMS oder E-Mail (IP-Verbindung) an die Vermittlungszentrale 8 übermittelt. Bei 47 werden die übermittelten Daten 19 anhand der Signatur und der PIN 11 überprüft. Es erfolgt die Zahlungsabwicklung mit dem zur ausgewählten Kreditkarte gehörenden Kreditinstitut 9. Bei 48 wird an Kunde 2 (Zahlungsempfänger) eine Bestätigungsnachricht gesendet und bei 49 wird an Kunde 1 (Zahlender) eine Bestätigung gesendet.

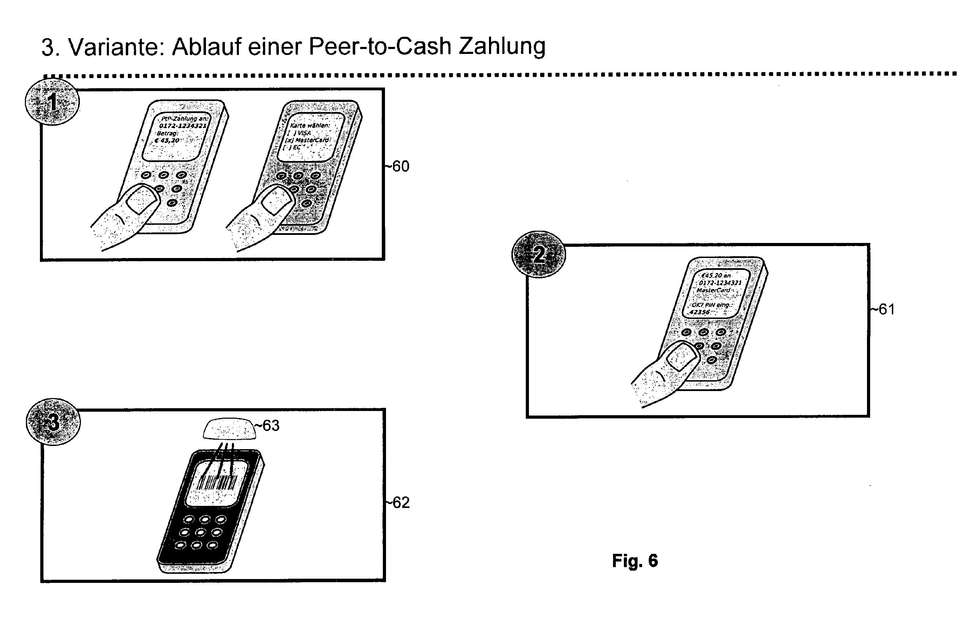

Fig. 6 zeigt einen Ablauf einer Peer-to-Cash Zahlung gemäß einer dritten Variante der Erfindung. Bei 60 gibt der Zahlende für die Peer-to-Cash Zahlung die Mobilnummer des Empfängers und den Geldbetrag an. Der Zahlende wählt zudem die Kreditkarte aus, die er zur Zahlung verwenden möchte. Bei 61 kann nach der Bestätigung der Zahlungsdaten und der PIN 11' (in verschlüsselter Form) durch Eingeben einer zur Vermittlungszentrale 8 gehörenden PIN in das Mobiltelefon 7 wird die Zahlung ausgeführt und der Geldbetrag kann vom Empfänger abgeholt werden. Bei 62 wird gezeigt, wie der Empfänger in einer Partner-Filiale den auf seinem Mobiltelefon 7 für diese Zahlung angezeigten Barcode vorzeigt. Der Barcode wird an einem Kassensystem mit Scanner 63 eingescannt und überprüft. Danach wird der Geldbetrag dem Empfänger ausgezahlt.

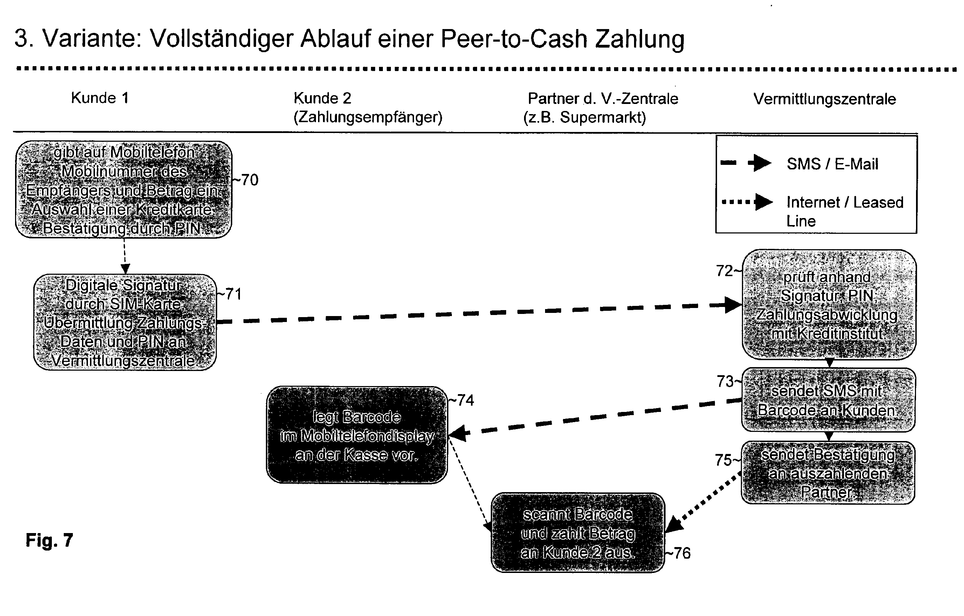

Fig. 7 zeigt einen vollständigen Ablauf einer Peer-to-Cash Zahlung gemäß einer dritten Variante der Erfindung. Bei 70 gibt ein Kunde auf seinem Mobiltelefon 7 die Mobilnummer des Empfängers und den zu zahlenden Betrag ein. Außerdem wählt er eine Kreditkarte aus, von der der Geldbetrag abgebucht werden soll. Dann bestätigt er die Zahlung durch Eingeben der von der Vermittlungszentrale 8 ausgegebenen PIN 11. Bei 71 wird eine elektronische Signatur der Zahlungsdaten und der verschlüsselten PIN 11' durchgeführt. Die Zahlungsdaten und die verschlüsselte PIN 11' werden per SMS an die Vermittlungszentrale 8 übermittelt. Bei 72 wird die elektronische Signatur und die PIN (nach Entschlüsselung) 11 überprüft. Es erfolgt eine Zahlungsabwicklung über das ausgewählte Kreditinstitut 9. Das heißt, dass dem Zahlenden der Geldbetrag von seiner ausgewählten Zahlungsquelle 14 abgebucht wird. Bei 73 sendet die Vermittlungszentrale 8 eine SMS mit dem Barcode an den Zahlungsempfänger (Kunde 2). Dieser legt bei 74 den Barcode, den das Display 10 seines Mobiltelefons 7 anzeigt, an der Kasse vor. Bei 75 wird eine Bestätigung an den auszahlenden Partner gesendet. Bei 76 scannt das Kassensystem des Partners den auf dem Display 10 des Mobiltelefons angezeigten Barcode ein und zahlt den Geldbetrag an Kunde 2 aus.

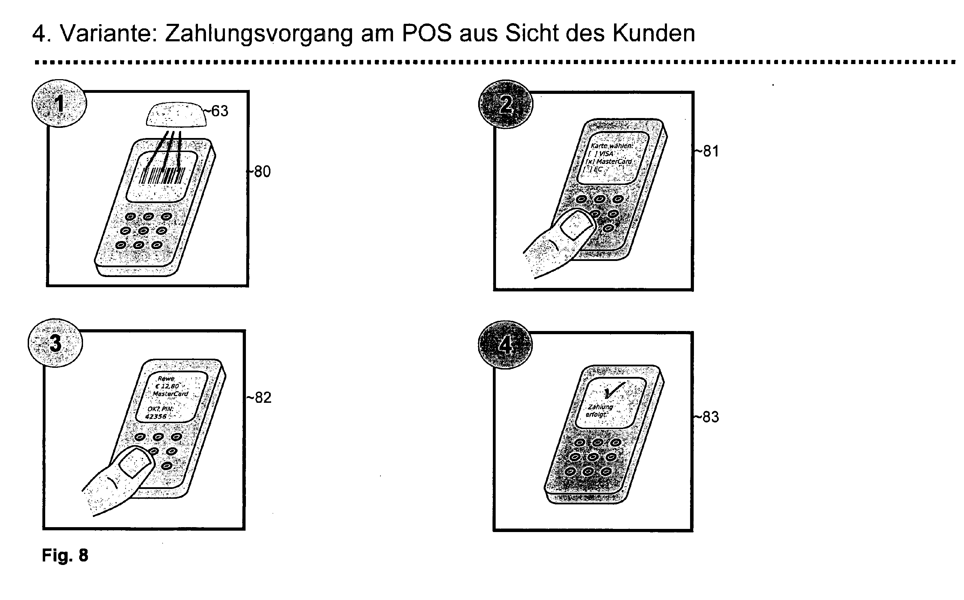

Fig. 8 veranschaulicht den Zahlungsvorgang am Verkaufspunkt aus Sicht des Kunden gemäß einer vierten Variante der Erfindung. Bei 80 zeigt das Mobiltelefon 7 nach Aktivierung des Zahlungsmodus einen Barcode an, über den die Bluetooth-Kennung des Mobiltelefons an den Händler gegeben wird. Ab diesem Zeitpunkt läuft die Kommunikation zwischen Mobiltelefon 7 und Händler 5 über eine Bluetooth-Verbindung. Bei 81 hat der Benutzer im Display 10 seines Mobiltelefons 7 die Möglichkeit eine aus mehreren Zahlungsquellen (EC-Karten, Kreditkarten, etc.) auszuwählen. Dabei werden nur die Karten angezeigt, die vom Händler auch tatsächlich akzeptiert werden. Bei 82 werden der Händler, der Geldbetrag und die Karte angezeigt. Die Zahlung wird durch Eingabe der PIN 11 bestätigt. Dem Händler wird dabei ein verschlüsseltes (nur von der Vermittlungszentrale 8 entschlüsselbares) Datenpaket übermittelt, das dieser an die Vermittlungszentrale 8 weiterleitet. Bei 83 wird die erfolgreiche Zahlung im Display 10 des Mobiltelefons 7 angezeigt, nachdem die Vermittlungszentrale 8 die Kartenzahlung für den Händler 5 abgewickelt hat.

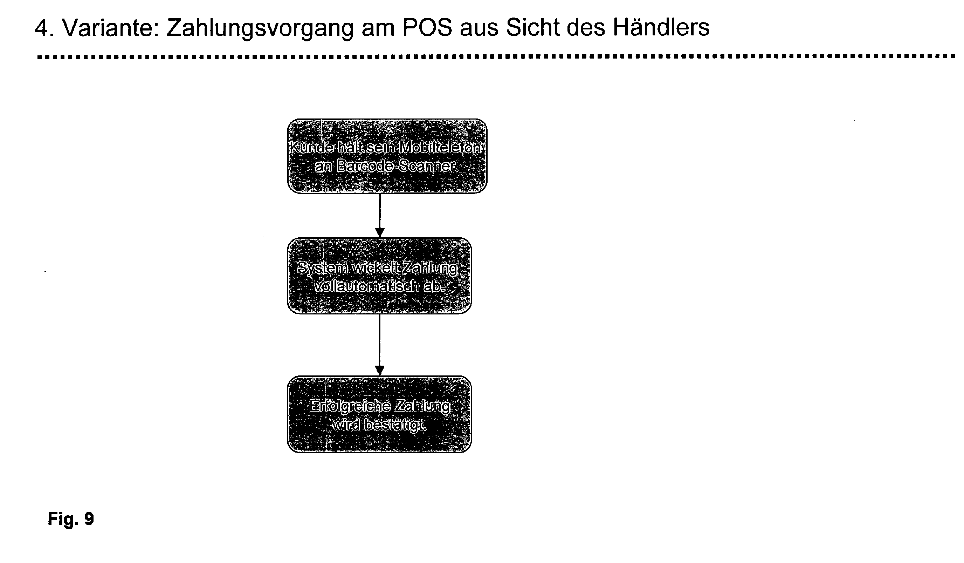

Fig. 9 veranschaulicht einen Zahlungsvorgang am Verkaufspunkt aus Sicht des Händlers 5. Um eine erhöhte Sicherheit zu gewährleisten, leitet die Vermittlungszentrale 8 die Daten direkt an das Kreditinstitut 9 weiter. Der Händler selbst bekommt die Kreditkartendaten zu keinem Zeitpunkt zu sehen. Das Kassensystem leitet lediglich ein verschlüsseltes Datenpaket vom Mobiltelefon 7 des Kunden an die Vermittlungszentrale 8 weiter, das nur von der Vermittlungszentrale 8 entschlüsselt werden kann. Am Ende wird die erfolgreiche Zahlung bestätigt.

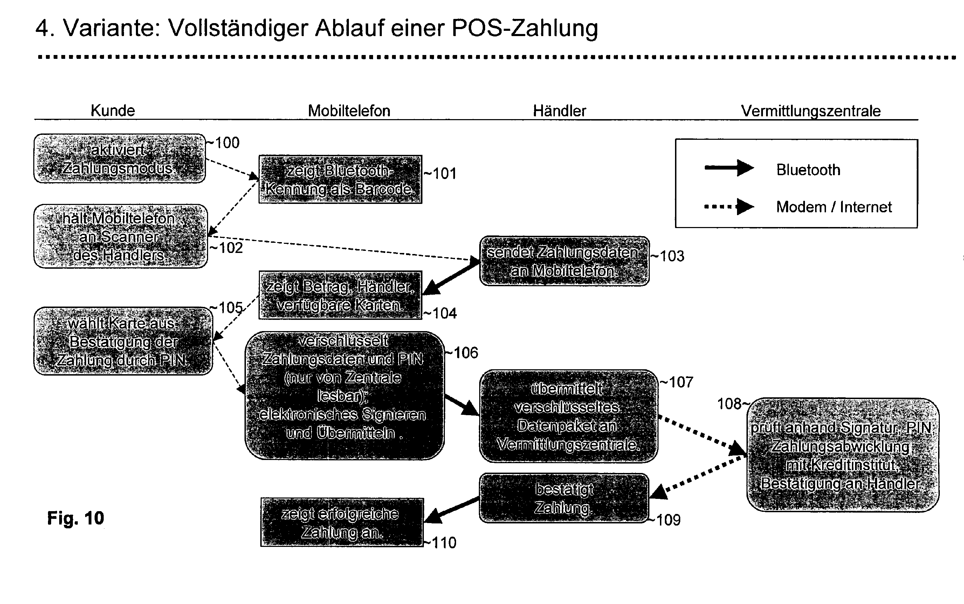

Fig. 10 veranschaulicht einen vollständigen Ablauf der Zahlung am POS gemäß der vierten Variante der Erfindung. Bei 100 aktiviert der Kunde den Zahlungsmodus seines Mobiltelefons 7. Daraufhin zeigt das Mobiltelefon 7 zeigt bei 101 seine Bluetooth-Kennung als Barcode an. Bei 102 hält der Kunde sein Mobiltelefon 7 an den Scanner des Händlers. Bei 103 sendet der Händler 5 die relevanten Zahlungsdaten 15 an das Mobiltelefon 7 des Kunden. Bei 104 zeigt das Mobiltelefon 7 den zu zahlenden Geldbetrag, den Händler, und die verfügbaren Karten in seinem Display 10 an. Der Kunde wählt bei 105 eine Karte aus und bestätigt die Zahlung durch Eingabe seiner PIN 11, die er von der Vermittlungszentrale 8 erhalten hat. Bei 106 werden die Zahlungsdaten 15 und die PIN 11 an den Händler über eine Bluetooth-Verbindung in verschlüsselter Form mit Signatur, nur von der Vermittlungszentrale 8 lesbar, übermittelt. Der Händler 5 übermittelt bei 107 die verschlüsselten Daten weiter an die Vermittlungszentrale 8. Bei 108 prüft die Vermittlungszentrale 8 die erhaltenen Zahlungsdaten anhand der Signatur und die PIN. Es erfolgt die Zahlungsabwicklung mit dem Kreditinstitut 9. Der Händler erhält bei 109 eine Bestätigung der Zahlung und das Mobiltelefon 7 zeigt bei 110 die erfolgreiche Zahlung an.

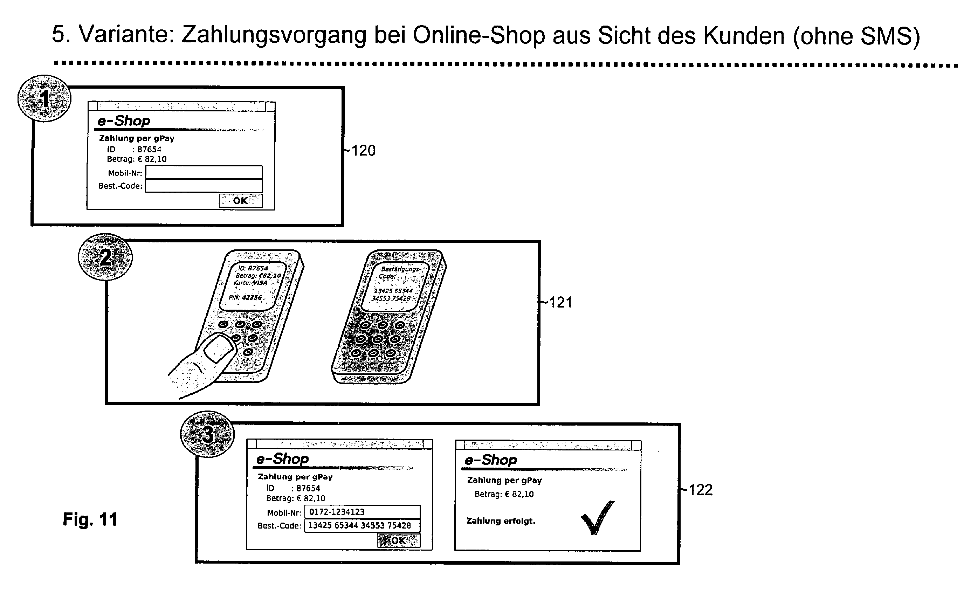

Fig. 11 zeigt einen Zahlungsvorgang in einem Online-Shop aus Sicht des Kunden (ohne SMS).

Diese Variante der Erfindung bezieht sich wie Variante 1 wieder auf ein Zahlverfahren in einem Online-Shop 3. Bei 120 wird der Kunde für die Zahlung im Online-Shop 3 aufgefordert, seine Mobilnummer und einen Bestätigungscode einzugeben. Bei 121 gibt er auf dem Mobiltelefon 7 die relevanten Zahlungsdaten 15 ein und bestätigt dies durch Eingabe seiner PIN 11. Das Mobiltelefon 7 errechnet daraus den Bestätigungscode. Nach Eingabe der eigenen Rufnummer und des Bestätigungscodes bestätigt bei 122 die Vermittlungszentrale 8 dem Händler 5 die Zahlung. Die Zahlung ist damit erfolgt.

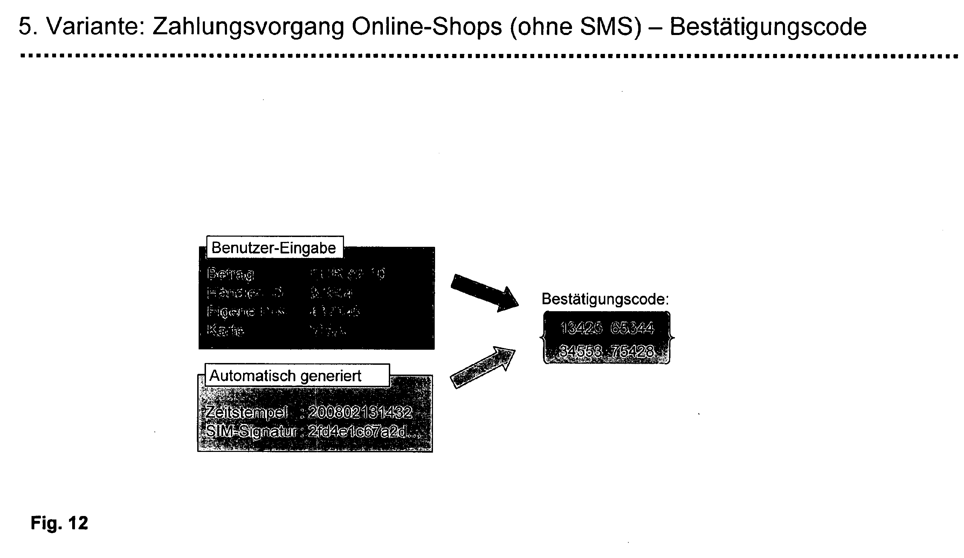

Fig. 12 zeigt einen Zahlungsvorgang in einem Online-Shop (ohne SMS) mit Bestätigungscode.

Da der Benutzer kein vollständiges verschlüsseltes Datenpaket eingeben kann, werden - im Gegensatz zur Abwicklung per SMS/E-Mail oder am POS - werden bei der SMS-Iosen Abwicklung die erforderlichen Daten zur Zahlungsbestätigung vom Mobiltelefon 7 in einen fälschungssicheren Bestätigungscode umgewandelt, der vom Benutzer auf der Webseite 2 des Online-Shops 3 eingegeben wird. Der Online-Shop 3 reicht diesen dann, zusammen mit den Zahlungsdaten 15, die er "behauptet", an die Vermittlungszentrale 8 weiter, um die Zahlung bestätigen zu lassen.

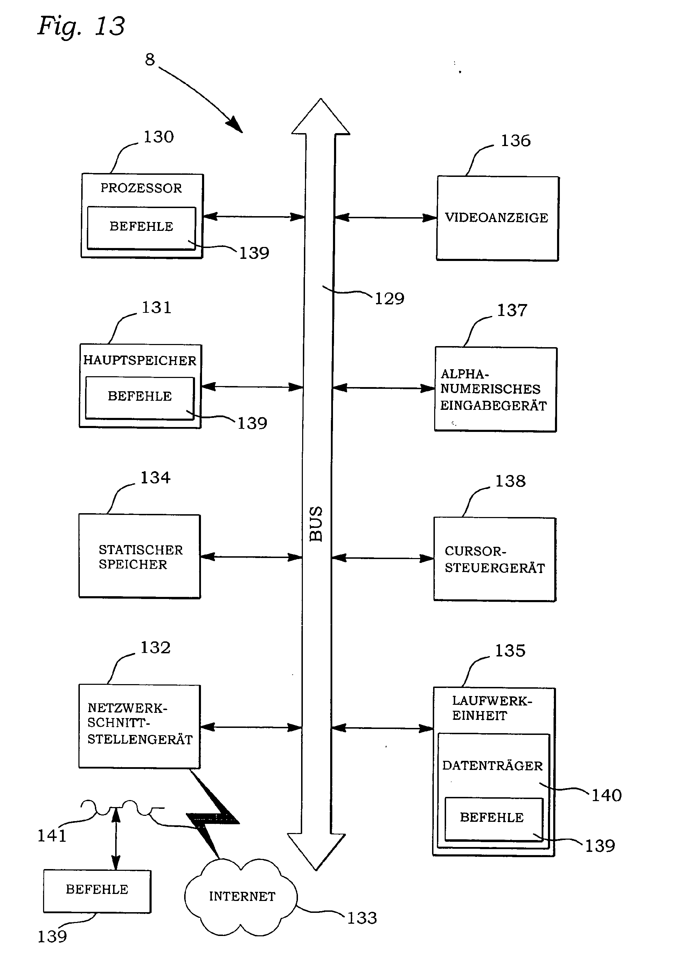

Fig. 13 ist eine diagrammartige Darstellung eines Computersystems, das die Funktionalität einer erfindungsgemäßen Vermittlungszentrale 8 bereitstellt und daher als "Vermittlungszentrale-Computersystem" 8 bezeichnet wird. In dem Vermittlungszentrale-Computersystem 8 kann ein Satz von Befehlen, um das Computersystem 8 zu veranlassen, die hier diskutierten Methodologien durchzuführen, ausgeführt werden. Das Vermittlungszentrale-Computersystem 8 umfasst einen Prozessor 130, einen Hauptspeicher 131 und ein Netzwerkschnittstellengerät 132, die miteinander über einen Bus 129 kommunizieren. Optional kann es ferner einen statischen Speicher 134 und eine Laufwerkeinheit 135 umfassen. Eine Videoanzeige 136, ein alphanumerisches Eingabegerät 137 und ein Cursorsteuergerät 138 können eine Benutzerschnittstelle des Vermittlungszentrale-Computersystems 8 bilden. Ein Satz von Befehlen (d.h. Software) 139, der eine oder alle oben beschriebenen Methodologien verkörpert, liegt vollständig oder wenigstens teilweise in oder auf einem maschinenlesbaren Medium, z.B. dem Hauptspeicher 131 und/oder dem Prozessor 130. Ein maschinenlesbares Medium, auf dem die Software 139 liegt, kann auch ein Datenträger 140 (z.B. eine nicht-auswechselbare Festplatte oder eine optische oder magnetische auswechselbare Scheibe), der Teil der Laufwerkeinheit 135 ist. Die Software 139 kann ferner als ein propagiertes Signal 141 über das Internet über die Netzwerkschnittstelle 132 übertragen oder empfangen werden.

Die oben beschriebenen Ausführungsformen der Erfindung gestatten ein sicheres Bezahlen per mobilen Endgeräten aus mehreren dem Benutzer zur Verfügung stehenden Zahlungsquellen.

Alle Veröffentlichungen und bestehenden Systeme in dieser Beschreibung werden hier durch Bezugnahme aufgenommen.

Obwohl bestimmte gemäß den Lehren der Erfindung geschaffene Verfahren und Vorrichtungen hier nicht beschrieben wurden, ist der Schutzbereich dieses Patents nicht darauf beschränkt. Im Gegenteil deckt dieses Patent alle Ausführungsformen der Lehren der Erfindung ab, die entweder wörtlich oder im Sinne der Äquivalenzlehre in den Schutzbereich der angefügten Ansprüche fallen.

## Patentansprüche

1. Verfahren zur Zahlung eines Geldbetrags über ein ein Chipmodul enthaltendes mobiles Endgerät, welches umfasst:
Bestimmen einer Zahlungsquelle auf dem mobilen Endgerät,
Bestätigen von die bestimmte Zahlungsquelle umfassenden Zahlungsdaten durch Eingeben einer zu einer Vermittlungszentrale gehörenden Kennung,
zumindest teilweise elektronisches Signieren der Zahlungsdaten und der verschlüsselten Kennung mittels eines auf dem Chipmodul abgelegten Schlüssels,
Übermitteln der signierten Zahlungsdaten und Kennung an die Vermittlungszentrale, und
Übermitteln einer Nachricht von der Vermittlungszentrale an ein zur bestimmten Zahlungsquelle gehörendes Zahlungsinstitut, den Geldbetrag von der Zahlungsquelle abzubuchen.

2. Verfahren gemäß Anspruch 1, wobei das Bestimmen einer Zahlungsquelle ein Auswählen einer Zahlungsquelle aus mehreren Zahlungsquellen umfasst.

3. Verfahren gemäß Anspruch 1 oder 2, wobei die Zahlungsdaten und die Kennung anhand der elektronischen Signatur in der Vermittlungszentrale überprüft werden.

4. Verfahren gemäß einem der vorhergehenden Ansprüche, wobei keine zur Zahlungsquelle gehörenden sicherheitsrelevanten Daten übermittelt werden.

5. Verfahren gemäß einem der vorhergehenden Ansprüche, wobei ein Benutzer nur unter jenen Zahlungsquellen auswählen kann, die ein Zahlungsempfänger für eine jeweilige Zahlung akzeptiert.

6. Verfahren gemäß einem der vorhergehenden Ansprüche, wobei der auf dem Chipmodul abgelegte Schlüssel ein privater Schlüssel ist und die Vermittlungszentrale über den zugehörigen öffentlichen Schlüssel verfügt.

7. Verfahren gemäß einem der vorhergehenden Ansprüche, welches danach ferner ein Bestätigen der Zahlung dem Empfänger durch die Vermittlungszentrale umfasst.

8. Verfahren gemäß einem der vorhergehenden Ansprüche, wobei die Zahlungsquelle ein Konto bei einem Zahlungsinstitut, insbesondere einer Bank oder einer Kreditkartenorganisation, oder eine Kreditkartennummer darstellt.

9. Verfahren gemäß einem der vorhergehenden Ansprüche, welches davor ferner umfasst:
Übermitteln einer ein mobile Endgerät identifizierenden Zeichenkette an einen Empfänger des Geldbetrags, und
Empfangen von Zahlungsdaten auf dem mobilen Endgerät per SMS, Bluetooth-, NFC- oder IP-Datenübertragung.

10. Verfahren gemäß Anspruch 9, wobei ein Empfänger des Geldbetrags ein Online-Shop ist und die identifizierende Zeichenkette über eine Eingabeschnittstelle des Online-Shops eingegeben wird.

11. Verfahren gemäß Anspruch 9 oder 10, wobei eine das mobile Endgerät identifizierende Zeichenkette die Telefonnummer des Mobiltelefons des Benutzers oder eine anonyme Identifikationszeichenkette ist.

12. Verfahren gemäß einem der Ansprüche 1 bis 8, wobei das mobile Endgerät ein erstes mobiles Endgerät darstellt, ein Empfänger eine ein zweites mobiles Endgerät besitzende Person ist, und das Verfahren davor ferner umfasst:
Eingeben einer das zweite mobile Endgerät identifizierenden Zeichenkette in das erste mobile Endgerät.

13. Verfahren gemäß Anspruch 12, wobei das Verfahren ferner umfasst:
Erhalten per SMS oder IP-Übertragung beim Empfänger eines im Display des zweiten mobilen Endgeräts sichtbaren, maschinenlesbaren Musters,
Scannen des Musters durch einen Auszahler,
Auszahlen des Geldbetrags an den Empfänger, und
Gutschreiben des Geldbetrags dem Auszahler.

14. Verfahren gemäß Anspruch 13, wobei das erste mobile Endgerät und das zweite mobile Endgerät identisch sind.

15. Verfahren gemäß einem der Ansprüche 1 bis 8, wobei das Übermitteln der signierten Zahlungsdaten und der signierten, verschlüsselten Kennung an die Vermittlungszentrale umfasst:
Übermitteln der signierten Zahlungsdaten und der signierten, verschlüsselten Kennung über eine Bluetooth- oder NFC-Verbindung an den Empfänger, und
Übermitteln des verschlüsselten Datenpakets vom Empfänger an die Vermittlungszentrale.

16. Verfahren gemäß Anspruch 15, welches davor ferner umfasst:
Aktivieren eines Zahlungsmodus am mobilen Endgerät,
Anzeigen einer Bluetooth- oder NFC-Kennung als maschinenlesbares Muster im Display des mobilen Endgeräts,
Scannen des Musters durch einen Scanner des Empfängers, und
Übermitteln von Zahlungsdaten an das mobile Endgerät über eine Bluetooth- oder NFC-Verbindung.

17. Verfahren zur Zahlung eines Geldbetrags über ein ein Chipmodul enthaltendes mobiles Endgerät, welches umfasst:
Eingeben von Zahlungsdaten, die eine Angabe einer Zahlungsquelle umfassen, und einer zu einer Vermittlungszentrale gehörenden Kennung auf einem mobilen Endgerät,
Berechnen eines Bestätigungscodes auf der Grundlage der Kennung, der Zahlungsdaten und eines Zeitstempels durch das mobile Endgerät,
Übermitteln der Zahlungsdaten, einer das mobile Endgerät identifizierenden Zeichenkette und des Bestätigungscodes von einem Zahlungsempfänger an die Vermittlungszentrale, und
Übermitteln einer Nachricht von der Vermittlungszentrale an ein zur ausgewählten Zahlungsquelle gehörendes Zahlungsinstitut, den Geldbetrag von der Zahlungsquelle abzubuchen.

18. Verfahren gemäß Anspruch 17, welches danach ferner ein Bestätigen der Zahlung dem Empfänger durch die Vermittlungszentrale umfasst.

19. Computerprogramm, entweder in der Form eines maschinenlesbaren Medium mit Programmcode, der darauf gespeichert ist, oder in der Form eines propagierten Signals, das eine Darstellung eines Programmcodes umfasst, wobei der Programmcode ausgelegt ist, ein Verfahren zur Zahlung eines Geldbetrags auszuführen, wenn er auf einem als Vermittlungszentrale verwendeten Computersystem ausgeführt wird, wobei das Verfahren umfasst:
Empfangen von signierten Zahlungsdaten, die eine vom Benutzer bestimmte Zahlungsquelle umfassen,
Empfangen einer zur Vermittlungszentrale gehörenden signierten, verschlüsselten Kennung, die zur Bestätigung der Zahlungsdaten von einem mobilen Endgerät aus übermittelt wurde;
Überprüfen der Zahlungsdaten und der verschlüsselten Kennung anhand der elektronischen Signatur;
Überprüfen der entschlüsselten Kennung, und
Übermitteln einer Nachricht von der Vermittlungszentrale an ein zur bestimmten Zahlungsquelle gehörendes Zahlungsinstitut, den Geldbetrag von der Zahlungsquelle abzubuchen.

20. Computersystem zur Verwendung als Vermittlungszentrale, auf dem das Computerprogramm gemäß Anspruch 19 installiert ist.

21. Computerprogramm, entweder in der Form eines maschinenlesbaren Medium mit Programmcode, der darauf gespeichert ist, oder in der Form eines propagierten Signals, das eine Darstellung eines Programmcodes umfasst, wobei der Programmcode ausgelegt ist, ein Verfahren zur Zahlung eines Geldbetrags auszuführen, wenn er auf einem ein Chipmodul enthaltendes mobiles Endgerät ausgeführt wird, wobei das Verfahren umfasst:
Ermöglichen dem Benutzer, eine Zahlungsquelle zu bestimmen und Zahlungsdaten, die die ausgewählte Zahlungsquelle umfassen, durch Eingeben einer zur Vermittlungszentrale gehörenden Kennung zu bestätigen,
zumindest teilweise elektronisches Signieren der Zahlungsdaten und der signierten, verschlüsselten Kennung mittels eines auf dem Chipmodul abgelegten Schlüssels, und
Übermitteln der signierten Zahlungsdaten und Kennung an die Vermittlungszentrale.

22. Mobiles Endgerät, auf dem das Computerprogramm gemäß Anspruch 21 installiert ist.

23. Austauschbares Chipmodul, auf dem das Computerprogramm gemäß Anspruch 21 abgelegt ist und das ausgelegt ist, das Verfahren auszuführen.

24. System zur Zahlung eines Geldbetrags, umfassend eine Vermittlungszentrale und ein ein Chipmodul enthaltendes mobiles Endgerät,
wobei das mobile Endgerät ausgelegt ist:
dem Benutzer zu ermöglichen, eine Zahlungsquelle zu bestimmen und die bestimmte Zahlungsquelle umfassende Zahlungsdaten durch Eingeben einer zur Vermittlungszentrale gehörenden Kennung zu bestätigen,
die Zahlungsdaten und die verschlüsselten Kennung mittels eines auf dem Chipmodul abgelegten Schlüssels zumindest teilweise zu signieren,
und die signierten Zahlungsdaten und die signierte, verschlüsselte Kennung an die Vermittlungszentrale zu übermitteln;
und wobei die Vermittlungszentrale ausgelegt ist:
eine Nachricht von der Vermittlungszentrale an ein zur bestimmten Zahlungsquelle gehörendes Zahlungsinstitut zu übermitteln, den Geldbetrag von der Zahlungsquelle abzubuchen.

## Geänderte Patentansprüche

### Geänderte Patentansprüche gemäss Regel 137(2) EPÜ.

**1.** Verfahren zur Zahlung eines Geldbetrags über ein ein Chipmodul (12) enthaltendes mobiles Endgerät (7), welches umfasst:
Auswählen (21, 29; 40, 45; 60, 70; 81, 105) einer Zahlungsquelle (14.1) aus mehreren bereitgestellten Zahlungsquellen (14.1, 14.2) während eines Zahlungsvorgangs auf dem mobilen Endgerät (7),
Bestätigen (21, 29; 41, 45; 61, 70; 82, 105) von die ausgewählte Zahlungsquelle (14.1) umfassenden Zahlungsdaten (15) durch Eingeben einer zu einer den mehreren Zahlungsquellen (14.1, 14.2) zugeordneten Vermittlungszentrale (8) gehörenden Kennung (11),
zumindest teilweise elektronisches Signieren (30; 46; 71;106) der Zahlungsdaten (15) und der verschlüsselten Kennung (11') mittels eines auf dem Chipmodul (12) abgelegten Schlüssels (16),
Übermitteln (30; 46; 71; 106, 107) der signierten Zahlungsdaten (15) und Kennung (11') an die Vermittlungszentrale (8), und
Übermitteln einer Nachricht (17) von der Vermittlungszentrale (8) an ein zur ausgewählten Zahlungsquelle (14.1) gehörendes Zahlungsinstitut (9.1), den Geldbetrag von der Zahlungsquelle (14.1) abzubuchen.

**2.** Verfahren gemäß Anspruch 1, wobei die Zahlungsdaten (15) und die Kennung (11') anhand der elektronischen Signatur in der Vermittlungszentrale (8) überprüft werden.

**3.** Verfahren gemäß einem der vorhergehenden Ansprüche, wobei keine zur ausgewählten Zahlungsquelle (14.1) gehörenden sicherheitsrelevanten Daten übermittelt werden.

**4.** Verfahren gemäß einem der vorhergehenden Ansprüche, wobei ein Benutzer nur unter jenen Zahlungsquellen auswählen kann, die ein Zahlungsempfänger für eine jeweilige Zahlung akzeptiert.

**5.** Verfahren gemäß einem der vorhergehenden Ansprüche, wobei der auf dem Chipmodul (12) abgelegte Schlüssel (16) ein privater Schlüssel ist und die Vermittlungszentrale (8) über den zugehörigen öffentlichen Schlüssel verfügt.

**6.** Verfahren gemäß einem der vorhergehenden Ansprüche, welches danach ferner ein Bestätigen der Zahlung dem Empfänger durch die Vermittlungszentrale (8) umfasst.

**7.** Verfahren gemäß einem der vorhergehenden Ansprüche, wobei die Zahlungsquelle (14.1) ein Konto bei einem Zahlungsinstitut (9.1), insbesondere einer Bank oder einer Kreditkartenorganisation, oder eine Kreditkartennummer darstellt.

**8.** Verfahren gemäß einem der vorhergehenden Ansprüche, welches davor ferner umfasst:
Übermitteln (20, 25) einer ein mobiles Endgerät (7) identifizierenden Zeichenkette an einen Empfänger des Geldbetrags, und
Empfangen (21, 27) von Zahlungsdaten auf dem mobilen Endgerät (7) per SMS, Bluetooth-, NFC- oder IP-Datenübertragung.

**9.** Verfahren gemäß Anspruch 8, wobei ein Empfänger des Geldbetrags ein Online-Shop ist und die identifizierende Zeichenkette über eine Eingabeschnittstelle des Online-Shops eingegeben wird.

**10.** Verfahren gemäß Anspruch 8 oder 9, wobei eine das mobile Endgerät (7) identifizierende Zeichenkette die Telefonnummer des Mobiltelefons des Benutzers oder eine anonyme Identifikationszeichenkette ist.

**11.** Verfahren gemäß einem der Ansprüche 1 bis 7, wobei das mobile Endgerät (7) ein erstes mobiles Endgerät darstellt, ein Empfänger eine ein zweites mobiles Endgerät besitzende Person ist, und das Verfahren davor ferner umfasst:
Eingeben (40, 45) einer das zweite mobile Endgerät identifizierenden Zeichenkette in das erste mobile Endgerät.

**12.** Verfahren gemäß Anspruch 11, wobei das Verfahren ferner umfasst:
Erhalten (62, 73, 74) per SMS oder IP-Übertragung beim Empfänger eines im Display des zweiten mobilen Endgeräts sichtbaren, maschinenlesbaren Musters,
Scannen (76) des Musters durch einen Auszahler,
Auszahlen (76) des Geldbetrags an den Empfänger, und
Gutschreiben des Geldbetrags dem Auszahler.

**13.** Verfahren gemäß Anspruch 12, wobei das erste mobile Endgerät und das zweite mobile Endgerät identisch sind.

**14.** Verfahren gemäß einem der Ansprüche 1 bis 7, wobei das Übermitteln der signierten Zahlungsdaten und der signierten, verschlüsselten Kennung an die Vermittlungszentrale (8) umfasst:
Übermitteln (106) der signierten Zahlungsdaten und der signierten, verschlüsselten Kennung über eine Bluetooth- oder NFC-Verbindung an den Empfänger, und
Übermitteln (107) des verschlüsselten Datenpakets vom Empfänger an die Vermittlungszentrale (8).

**15.** Verfahren gemäß Anspruch 14, welches davor ferner umfasst:
Aktivieren (100) eines Zahlungsmodus am mobilen Endgerät,
Anzeigen (101) einer Bluetooth- oder NFC-Kennung als maschinenlesbares Muster im Display des mobilen Endgeräts (7),
Scannen (102) des Musters durch einen Scanner des Empfängers, und
Übermitteln (103) von Zahlungsdaten an das mobile Endgerät über eine Bluetooth- oder NFC-Verbindung.

**16.** Computerprogramm, entweder in der Form eines maschinenlesbaren Medium mit Programmcode, der darauf gespeichert ist, oder in der Form eines propagierten Signals, das eine Darstellung eines Programmcodes umfasst, wobei der Programmcode ausgelegt ist, ein Verfahren zur Zahlung eines Geldbetrags auszuführen, wenn er auf einem als Vermittlungszentrale (8) verwendeten Computersystem ausgeführt wird, wobei das Verfahren umfasst:
Empfangen von signierten Zahlungsdaten (15), die eine vom Benutzer aus mehreren Zahlungsquellen (14.1, 14.2) während eines Zahlungsvorgangs ausgewählte Zahlungsquelle (14.1) umfassen,
Empfangen einer zur Vermittlungszentrale (8) gehörenden signierten, verschlüsselten Kennung (11'), die zur Bestätigung der Zahlungsdaten (15) von einem mobilen Endgerät (7) aus übermittelt wurde;
Überprüfen (31; 47; 72; 108) der Zahlungsdaten (15) und der verschlüsselten Kennung (11') anhand der elektronischen Signatur;
Überprüfen (31; 47; 72; 108) der entschlüsselten Kennung (11), und
Übermitteln einer Nachricht (17) von der Vermittlungszentrale (8) an ein zur ausgewählten Zahlungsquelle (14.1) gehörendes Zahlungsinstitut (9.1), den Geldbetrag von der Zahlungsquelle (14.1) abzubuchen.

**17.** Computersystem zur Verwendung als Vermittlungszentrale (8), auf dem das Computerprogramm gemäß Anspruch 16 installiert ist.

**18.** Computerprogramm, entweder in der Form eines maschinenlesbaren Medium mit Programmcode, der darauf gespeichert ist, oder in der Form eines propagierten Signals, das eine Darstellung eines Programmcodes umfasst, wobei der Programmcode ausgelegt ist, ein Verfahren zur Zahlung eines Geldbetrags auszuführen, wenn er auf einem ein Chipmodul (12) enthaltendes mobiles Endgerät (7) ausgeführt wird, wobei das Verfahren umfasst:
Ermöglichen dem Benutzer, eine Zahlungsquelle (14.1) aus mehreren bereitgestellten Zahlungsquellen (14.1, 14.2) während eines Zahlungsvorgangs auszuwählen und Zahlungsdaten (15), die die ausgewählte Zahlungsquelle (14.1) umfassen, durch Eingeben einer zu einer den mehreren Zahlungsquellen (14.1, 14.2) zugeordneten Vermittlungszentrale (8) gehörenden Kennung (11) zu bestätigen,
zumindest teilweise elektronisches Signieren der Zahlungsdaten (15) und der signierten, verschlüsselten Kennung (11') mittels eines auf dem Chipmodul (12) abgelegten Schlüssels (16), und
Übermitteln der signierten Zahlungsdaten (15) und Kennung (11') an die Vermittlungszentrale (8).

**19.** Mobiles Endgerät, auf dem das Computerprogramm gemäß Anspruch 18 installiert ist.

**20.** Austauschbares Chipmodul, auf dem das Computerprogramm gemäß Anspruch 19 abgelegt ist und das ausgelegt ist, das Verfahren auszuführen.

**21.** System zur Zahlung eines Geldbetrags, umfassend eine mehreren Zahlungsquellen (14.1, 14.2) zugeordnete Vermittlungszentrale (8) und ein ein Chipmodul (12) enthaltendes mobiles Endgerät (7),
wobei das mobile Endgerät (7) ausgelegt ist:
dem Benutzer zu ermöglichen, eine Zahlungsquelle (14.1) aus mehreren bereitgestellten Zahlungsquellen (14.1, 14.2) während eines Zahlungsvorgangs auszuwählen und die ausgewählte Zahlungsquelle (14.1) umfassende Zahlungsdaten (15) durch Eingeben einer zur Vermittlungszentrale (8) gehörenden Kennung (11) zu bestätigen,
die Zahlungsdaten (15) und die verschlüsselten Kennung (11') mittels eines auf dem Chipmodul (12) abgelegten Schlüssels (16) zumindest teilweise zu signieren,
und die signierten Zahlungsdaten (15) und die signierte, verschlüsselte Kennung (11') an die Vermittlungszentrale (8) zu übermitteln (30; 46; 71; 106, 107);
und wobei die Vermittlungszentrale (8) ausgelegt ist:
eine Nachricht (17) von der Vermittlungszentrale (8) an ein zur ausgewählten Zahlungsquelle (14.1) gehörendes Zahlungsinstitut (9.1) zu übermitteln, den Geldbetrag von der Zahlungsquelle (14.1) abzubuchen.
